# EUROPEAN PATENT SPECIFICATION

(11) **EP 0 637 811 B1**
(45) Date of publication and mention of the grant of the patent: **10.11.1999**
(21) Application number: 94111380.5
(22) Date of filing: 21.07.1994
(51) Int. Cl.: G06K 9/20

(54) **Method for defining a plurality of form definition data sets**
Verfahren zum Definieren mehrerer Formulardefinitionsdatensätze
Procédé pour définir plusieurs jeux de données de définition de formulaire

(30) Priority: 02.08.1993 US 100846
(43) Date of publication of application: 08.02.1995
(73) Proprietor: International Business Machines Corporation, Armonk, N.Y. 10504 (US)
(72) Inventor: Billings, Douglas W., Montgomery Village, MD 20879 (US); Burger, Mark E., Germantown, MD 20874 (US); Pindell, Louis M., Gaithersburg, MD 20878 (US)
(74) Representative: Pratt, Richard Wilson

(56) References cited:
- EP-A- 0 463 471
- US-A- 5 119 437
- IBM TECHNICAL DISCLOSURE BULLETIN, vol. 34, no. 11, 1 April 1992 pages 374-375, XP 000303298 'GRAPHICAL INTERFACE FOR IMAGE ATTRIBUTE SPECIFICATION'

## Description

### Background of the Invention

### 1. Technical Field

The invention disclosed broadly relates to data processing and more particularly relates to character recognition of document forms.

### 2. Related Patents and Patent Applications

This patent application is related to the copending European patent applications 93104766.6 published as EP 0565911-A, 93104767.4 published as EP 0565912-A, 94105292.0 and the US patent US 5140650-A.

### 3. Background Art

Data contained in digitized images can be extracted for a number of purposes, and in many different ways. A prerequisite for extracting information from forms is knowledge of the types and locations of the data (information about the "fields" of the form). Currently, most forms processing applications have their own method for "defining" forms, and each method is incompatible with the others. In large image systems which use several different forms processing applications, each form needs to be separately defined for each application, which costs time and introduces inconsistencies in the form definitions. The method presented here creates form definitions which can then be used for almost any forms processing application.

US-A-5,119,437 describes a tabular document reader service for recognizing characters on a tabular document. No plurality of OCR programs is used there, no conversion means for modifying data formats and field definintions are only obtained using a filled-in form.

EP-A- 0 463 471 describes an image processing system for documentary data which does not provide for the generation and processing of a plurality of form definition data.

### Objects of the Invention

It is therefore an object of the invention to make a plurality of form definition data sets for enabling a given document form to be read by a corresponding plurality of character recognition programs.

It is another object of the invention to make a plurality of form definition data sets in a single working session, for use by a corresponding plurality of character recognition programs.

It is another object of the invention to make a plurality of form definition data sets in an improved manner, for enabling a given document form to be read by a corresponding plurality of character recognition programs.

It is another object of the invention to enable the modification of form definition data sets in an improved manner.

### Summary of the Invention

These objects are accomplished by the invention as specified in claims 1 and 2; embodiments of the invention are described in the dependent claims. The invention is a method to define, in a single working session, a plurality of form definition data sets for a particular master form, to enable a corresponding plurality of character recognition programs to read marks and characters inscribed on filled out copies of the form.

The invention is implemented in a data processing system which includes a first processor coupled to a second processor. The first processor includes a document scanner to receive an image of an original document form, the document form having a plurality of fields for inscribing characters on the form. The second processor includes a plurality of character recognition programs, with each character recognition program using a corresponding form definition data set composed of a plurality of field definition data sets, one for each of the plurality of fields on the original document form.

A first one of the plurality of character recognition programs uses a first format for form definition data sets, and a second one of the plurality of character recognition programs uses a second format for form definition data sets.

The method for enabling the plurality of character recognition programs to recognize characters inscribed on a filled out version of the document form, includes the step of storing a first data conversion means in the first processor, to convert a field attribution data set into the first format for a form definition data set. The method continues by storing a second data conversion means in the first processor, to convert a field attribution data set into the second format for a form definition data set. The method continues by scanning into the first processor an image of the original document form.

The method continues by defining in the first processor a plurality of field attribute data sets, one for each of the plurality of fields on the form. The defining step includes the step of receiving a pointer device signal indicating a location of a first one of the plurality of fields on the image of the original document form. The defining step continues by converting the pointer device signal into field location information for the first field and storing it in a first field attribute data set. The defining step continues by receiving attribute information for the first field and storing it in the first field attribute data set. The defining step continues by the attribute information includes expected data type information and expected data format information.

Then the method continues by receiving in the first processor, a first selection for the first character recognition program and accessing the first data conversion means to convert the first field attribution data set into a first form definition data set having the first format. The method continues by receiving in the first processor, a second selection for the second character recognition program and accessing the second data conversion means to convert the first field attribution data set into a second form definition data set having the second format. The method continues by transferring the first and second form definition data sets to the second processor.

When a filled out version of the document is to be subjected to character recognition, the method continues by receiving in the second processor an image of a filled out version of the document form. The method continues by performing character recognition on the filled out version of the document in the second processor with the first one of the plurality of character recognition programs using the first form definition data set. The method continues by performing character recognition on the filled out version of the document in the second processor with the second one of the plurality of character recognition programs using the second form definition data set.

The method concludes by outputting a first character representation from the second processor using the first character recognition program and outputting a second character representation from the second processor using the second character recognition program.

In another feature of the invention, the first data conversion means to convert the field attribution data set into the first form definition data set is a first computer program subroutine stored in the first processor, and the second data conversion means to convert the field attribution data set into the second form definition data set is a second computer program subroutine stored in the first processor.

In another feature of the invention, the first data conversion means to convert the field attribution data set into the first form definition data set is a first data mapping table stored in the first processor, and the second data conversion means to convert the field attribution data set into the second form definition data set is a second data mapping table stored in the first processor.

Another feature of the invention, displays an editing window and a field attribute window on a display device in the first processor. The field attribute window provides alphanumeric display of field attributes which include field location coordinates. The editing window displays the image of the document and provides a graphical depiction of a selection area which is juxtaposed with the displayed image of the document and positioned at a location on the editing window in response to the pointer device signal. The field attribute window displays an alphanumeric representation of coordinates of the location of the selection area. The feature selectively stores the field attributes displayed in the field attribute window, as the field attribute data set.

In another feature of the invention, the attributes further include field name, field width, field height, maximum characters, segmentation, orientation, threshold, context check, required status, required value, data type and font.

Another feature of the invention, stores a third data conversion means in the first processor, to convert a field attribution data set into a modified version of the first format for a form definition data set. The third data conversion means substitutes for the first data conversion means. The feature accesses the third data conversion means to convert the first field attribution data set into a first form definition data set having the modified version of the first format.

In another feature of the invention, the third data conversion means to convert the field attribution data set into the modified version of the first form definition data set is a third computer program subroutine stored in the first processor.

In another feature of the invention, the first data conversion means further includes means to convert the first form definition data set back into the field attribution data set. The feature inputs the first form definition data set, accesses the first data conversion means, reconverts the first form definition data set back into the field attribution data set, displays the editing window and the field attribute window on the display device in the first processor, and displays in the field attribute window an alphanumeric display of field attributes for the reconverted field attribute data set.

Another feature of the invention, displays in the editing window a graphical depiction of a selection area positioned at a location on the editing window in response to the field attributes for the reconverted field attribute data set.

Another feature of the invention, performs a line finding process in the first processor, to locate enclosed boxes which depict fields in the image of the document displayed in the editing window. The feature identifies coordinates of the enclosed boxes, displays in the field attribute window, an alphanumeric display of the coordinates of at least one of the enclosed boxes, as field attributes which include field location coordinates, and selectively stores the field attributes displayed in the field attribute window, as the field attribute data set.

The resulting invention defines, in a single working session, a plurality of form definition data sets for a particular master form, to enable a corresponding plurality of character recognition programs to read marks and characters inscribed on filled out copies of the form.

### Description of the Figures

These and other objects features and advantages of the invention will be more fully appreciated with reference to the accompanying figures.
- Fig. 1A: is a functional block diagram of the invention.
- Figs.1B/1C: are a flow diagram of the overall method of the invention.
- Fig. 1D: is a flow diagram of the details of step 522 of Fig. 1B.
- Fig. 1E: is a flow diagram of the reconversion method.
- Fig. 1F: is a flow diagram of the an alternate method to perform step 522 of Fig. 1B, using a line finding process.
- Fig. 1G: is a flow diagram of the details of step 530 of Fig. 1C.
- Fig. 1H: is a flow diagram of the details of step 532 of Fig. 1C.
- Fig. 1I: is a flow diagram of the details of the reconversion method of Fig. 1E.
- Fig. 1J: is a flow diagram of the details of linking to a user-defined subroutine to modify the format of a form definition data set, from Fig. 1H.
- Fig. 2: shows the layout of the screen 200 for the examples shown in Figs. 4 to 8 and Fig. 10 to 12.
- Fig. 3: shows an example the bit map image of the form to be defined.
- Fig. 4: shows an example appearance of the display screen 118 and the contents of the display buffer 200, with the editing window 109 and the field attribute window 111, in accordance with the invention.
- Fig. 5: shows an example of the "Edit" pulldown menu 204 on edit window 109.
- Fig. 6: shows an example of the contents of the "View" pulldown menu 206 on edit window 109.
- Fig. 7: shows a rescaled view of the image of Fig. 6, and the rectangular region 230 designated by the user with the mouse, to specify the location of a field to be defined for the document form.
- Fig. 8: shows an example of the "Generate" pulldown menu 214 contents.
- Fig. 9: shows an example format for the field definition data set.
- Fig. 10: shows an example of the contents of the "Load" pulldown menu 212.
- Fig. 11: shows an example of misregistered fields produced from an existing form definition data set.
- Fig. 12: shows an example of the correction of the registration of the fields shown in Fig. 11.

### Discussion of the Preferred Embodiment

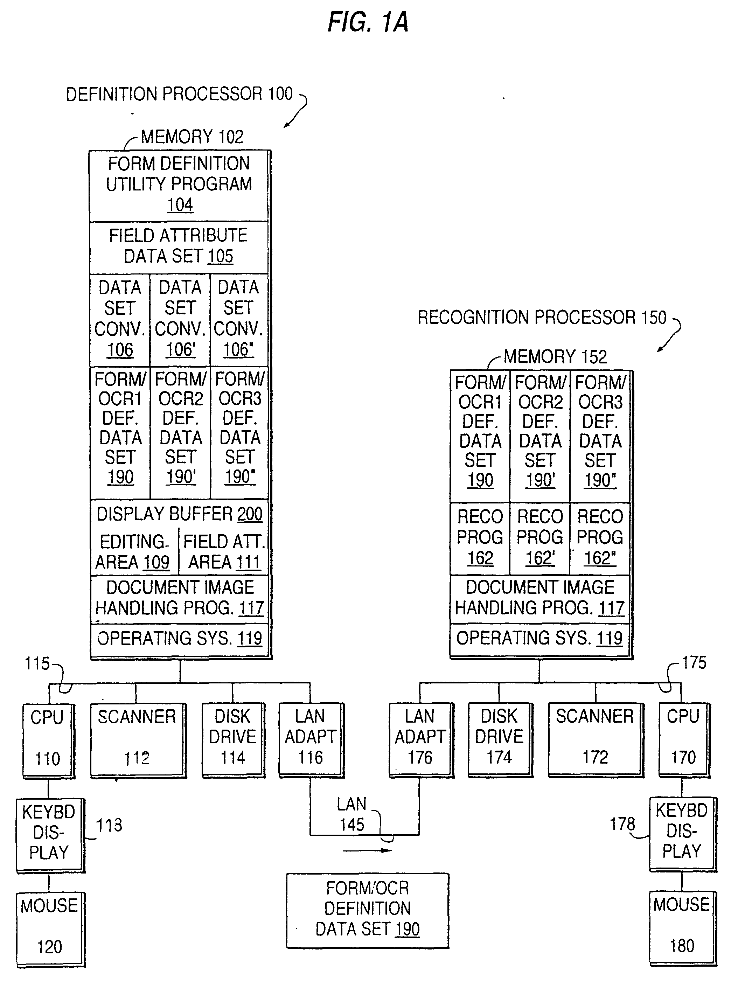

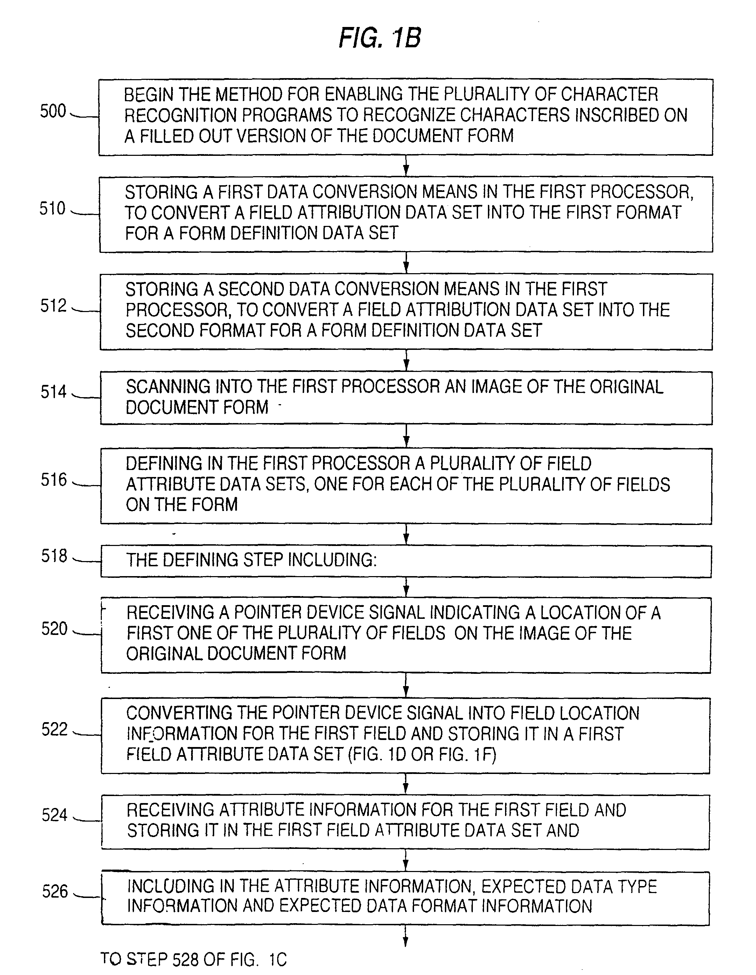

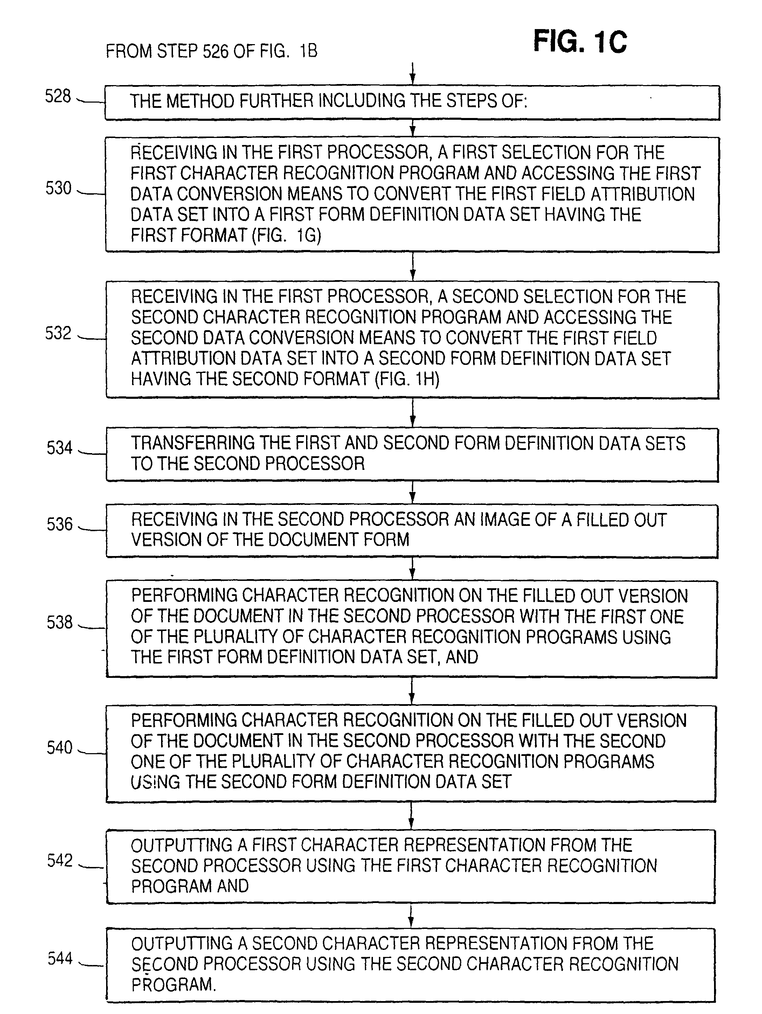

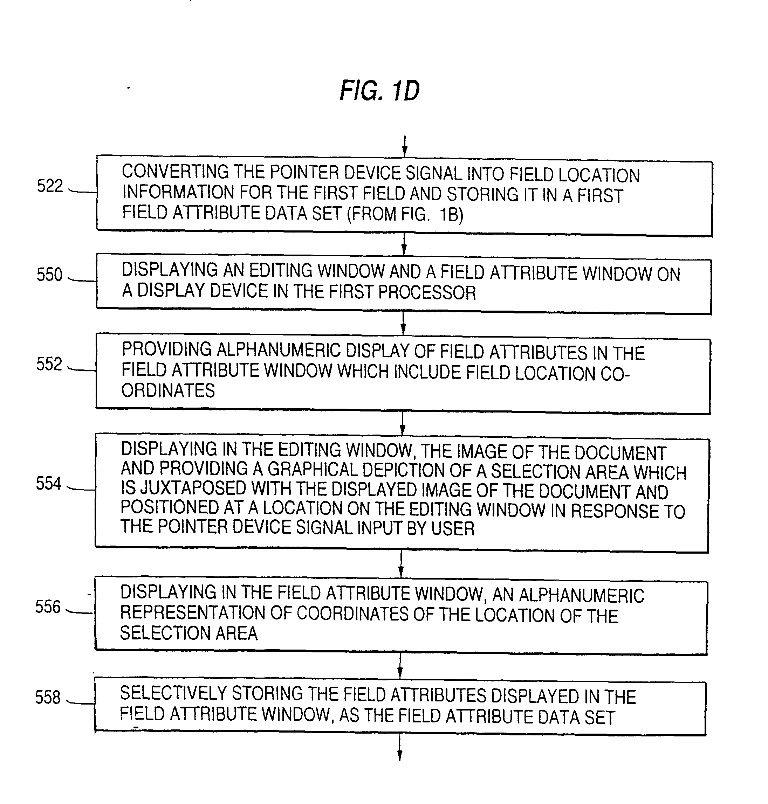

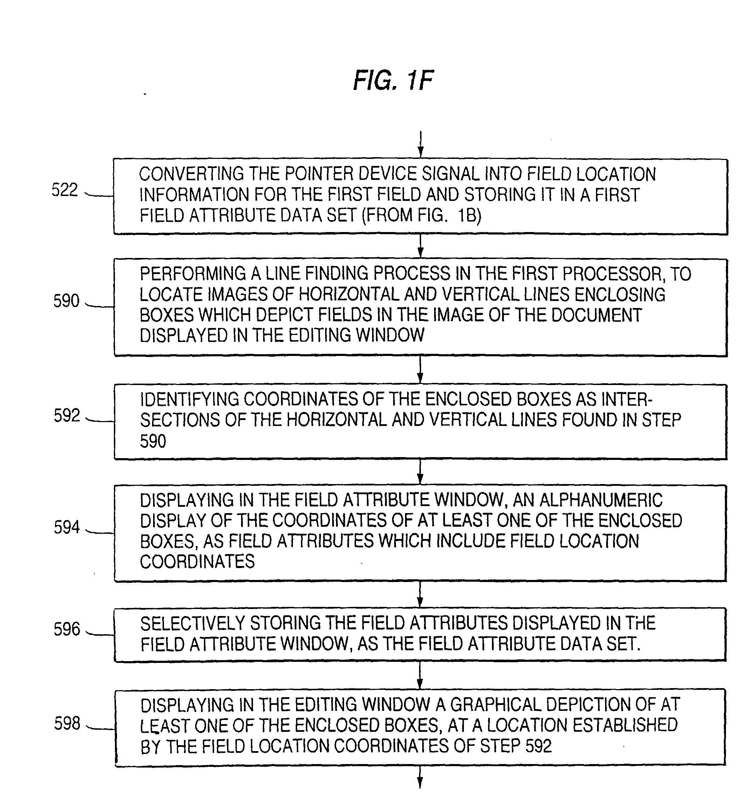

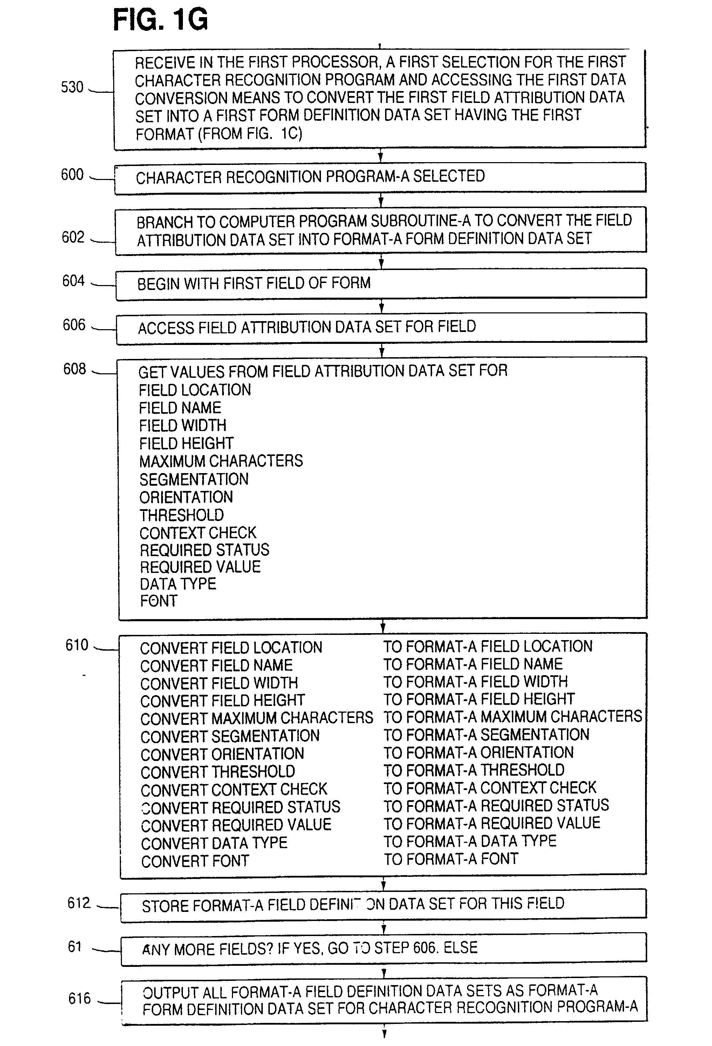

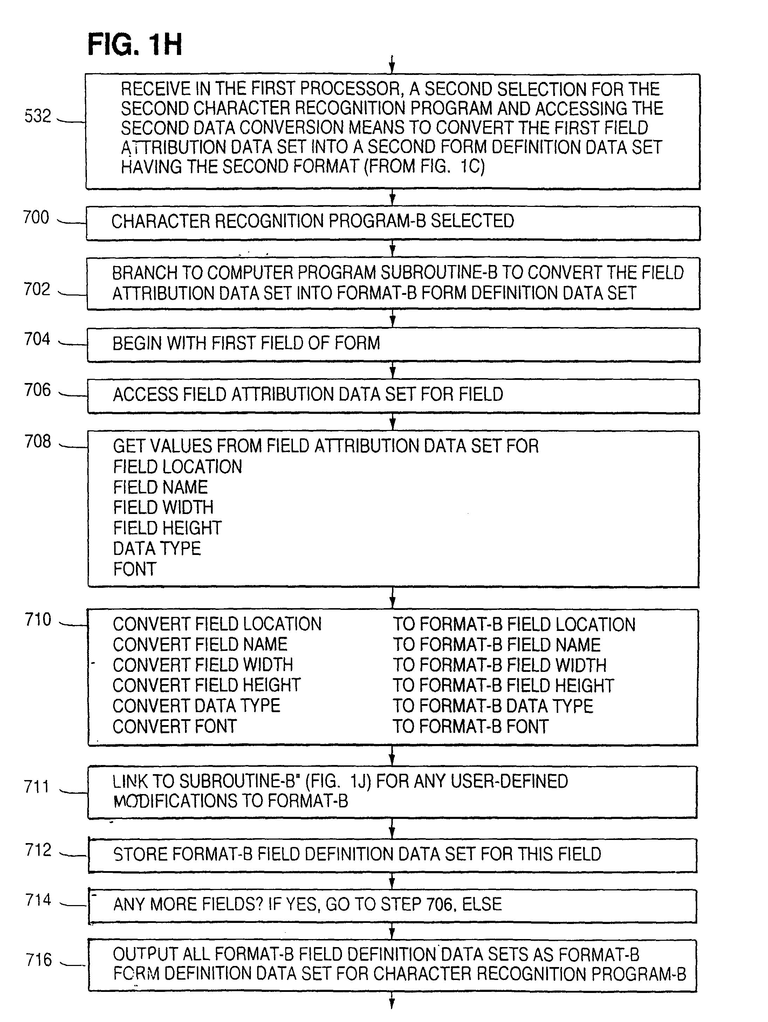

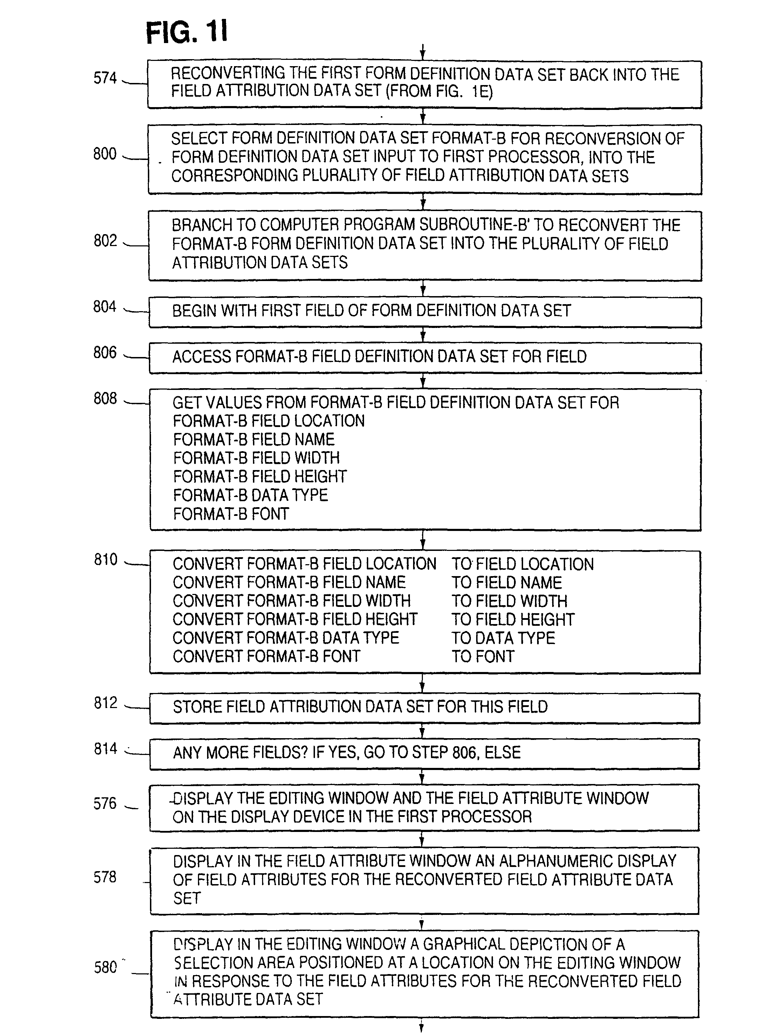

Fig. 1A is a functional block diagram of the data processing system within which the invention finds application. The system includes a definition processor 100 which is connected over the local area network (LAN) 145, to the recognition processor 150. The definition processor 100 includes a memory 102 which is connected by means of the bus 115 to the CPU 110, the scanner 112, the disk drive 114 and the LAN adapter 116. The bus 115 also connects to the keyboard and display 118 and to a mouse pointing device 120. The memory 102 of the definition processor 100 includes a form definition utility program 104, whose flow diagram is shown in steps 500-534 in Figs. 1B and 1C, and a field attribute data set 105.

In accordance with the invention, a data set conversion program or map 106 is included in memory 102, which converts the field attribute data set 105 into the form definition data set 190. Similarly, a second data set conversion program or map 106' converts the field attribute data set 105 into the form definition data set 190'. Still further, the third data set conversion program or map 106'' converts the field attribute data set 105 into a form definition data set 190''. The memory 102 also includes a display buffer 200 wherein an editing area 109 and a field attribute area 111 can be assembled and stored. The memory 102 also includes a document image handling program 117 and an operating system 119. The programs stored in the memory 102 are sequences of executable instructions which, when executed in the CPU 110, carry out the intended functions to be performed by the programs.

The recognition processor 150 of Fig. 1A includes the memory 152, and the bus 175 which connects the LAN adapter 176, the disk drive 174, the scanner 172, the CPU 170, the keyboard and display 178, and the mouse pointing device 180. The memory 152 of the recognition processor 150 includes a copy of the form definition data set 190 which has been transferred to it over the LAN 145 from the definition processor 100. Similarly, the memory 152 of the recognition processor 150 also includes a copy of the form definition data set 190' and the form definition data set 190'', both of which have been transferred over the LAN 145 from the definition processor 100. Also included in the memory 152 is a first recognition program 162 which makes use of the form definition data set 190 to read document form as shown in steps 538 and 542 of Fig. 1C. Also included in the memory 152 is a second character recognition program 162' which uses the second form definition data set 190' to read the same document form as shown in steps 540 and 544 of Fig. 1C. Also included in the memory 152 is a third character recognition program 162'' which uses the third form definition data set 190'' to read the same document form. Also included in the memory 152 is the document image handling program 117 and the operating system 119. The computer program stored in the memory 152 are sequences of executable instructions which, when executed in the CPU 170, carry out the intended functions to be performed by the programs. LAN adapter 116 of the definition processor 100, connects the LAN 145 to the LAN adapter 176 of the recognition processor 150. The character recognition programs 162, 162' and 162'' can be executed in separate processors connected to LAN 145. In an alternate embodiment, both processors 100 and 150 can be combined into one processor.

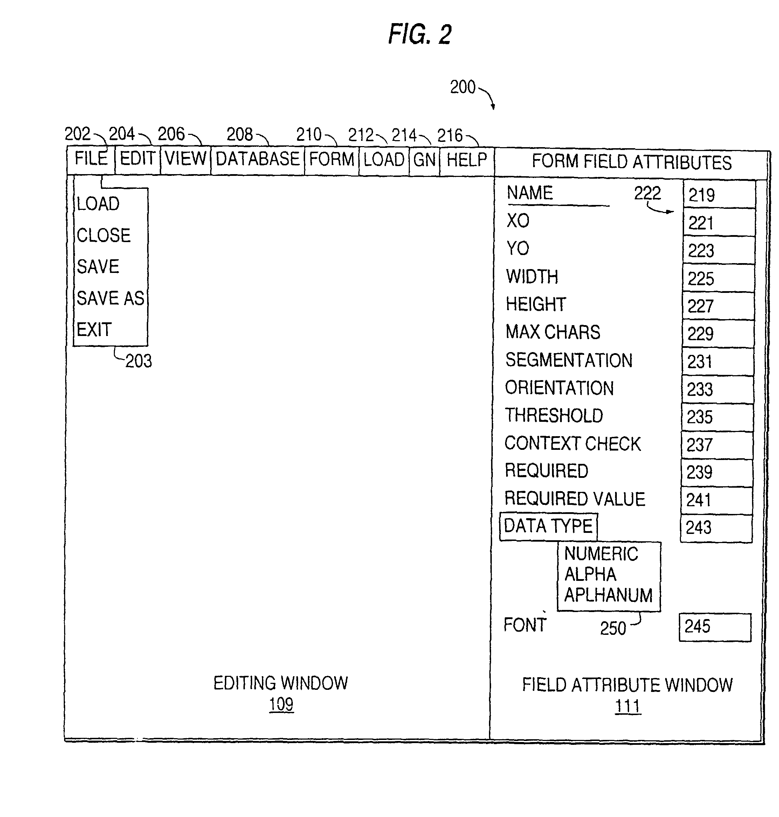

The display buffer 200 of the memory 102 is laid out in the manner shown in Fig. 2. The flow diagrams of Figs. 1B-1J are implemented as computer programs which are sequences of executable instructions which are stored in the memory 102 of the definition processor 100.

Figs. 1B and 1C are a flow diagram of the overall method of the invention which can be implemented as a computer program 104 to run on processors 100 and 150. Fig. 1B carries out the following steps.
- Step 500:: Begin the method for enabling the plurality of character recognition programs to recognize characters inscribed on a filled out version of the document form.
- Step 510:: Storing a first data conversion means in the first processor 100, to convert a field attribution data set into the first format for a form definition data set.
- Step 512:: Storing a second data conversion means in the first processor 100, to convert a field attribution data set into the second format for a form definition data set.
- Step 514:: Scanning into the first processor an image of the original document form with scanner 112.
- Step 516:: Defining in the first processor 100 a plurality of field attribute data sets 105, one for each of the plurality of fields on the form.
- Step 518:: The defining step includes steps 520 to 526:
- Step 520:: Receiving a pointer device signal from mouse 120 indicating a location of a first one of the plurality of fields on the image of the original document form.
- Step 522:: Converting the pointer device signal into field location information for the first field and storing it in a first field attribute data set 105 (Fig. 1D or Fig. 1F).
- Step 524:: Receiving attribute information from keyboard 118 for the first field and storing it in the first field attribute data set 105 and
- Step 526:: Including in the attribute information, expected data type information and expected data format information.

Step 526 flows to step 528 of Fig. 1C.

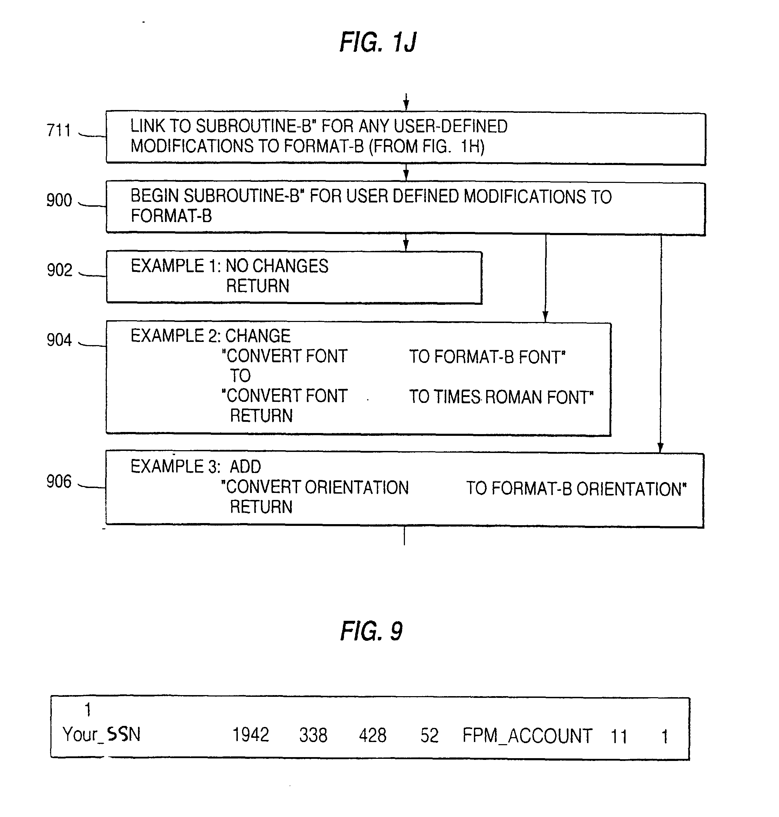

Fig. 1C carries out the following steps.
- Step 528:: The method further including the steps of:
- Step 530:: Receiving in the first processor 100, a first selection by the user, for the first character recognition program 162 and accessing the first data conversion means 106 to convert the first field attribution data set 105 into a first form definition data set 190 having the first format (Fig. 1G). The conversion means 106 can be the data conversion program shown in Fig. 1G.
- Step 532:: Receiving in the first processor, a second selection by the user, for the second character recognition program 162' and accessing the second data conversion means 106' to convert the first field attribution data set 105 into a second form definition data set 190' having the second format (Fig. 1H). The second conversion means 106' can be the data conversion program shown in Fig. 1H.
- Step 534:: Transferring the first and second form definition data sets 190 and 190' to the second processor 150.
- Step 536:: Receiving in the second processor 150 an image of a filled out version of the document form from scanner 172.
- Step 538:: Performing character recognition on the filled out version of the document in the second processor 150 with the first one 162 of the plurality of character recognition programs using the first form definition data set 190, and
- Step 540:: Performing character recognition on the filled out version of the document in the second processor 150 with the second one 162' of the plurality of character recognition programs using the second form definition data set 190'.
- Step 542:: Outputting a first character representation from the second processor 150 using the first character recognition program 162 and
- Step 544:: Outputting a second character representation from the second processor 150 using the second character recognition program 162'.

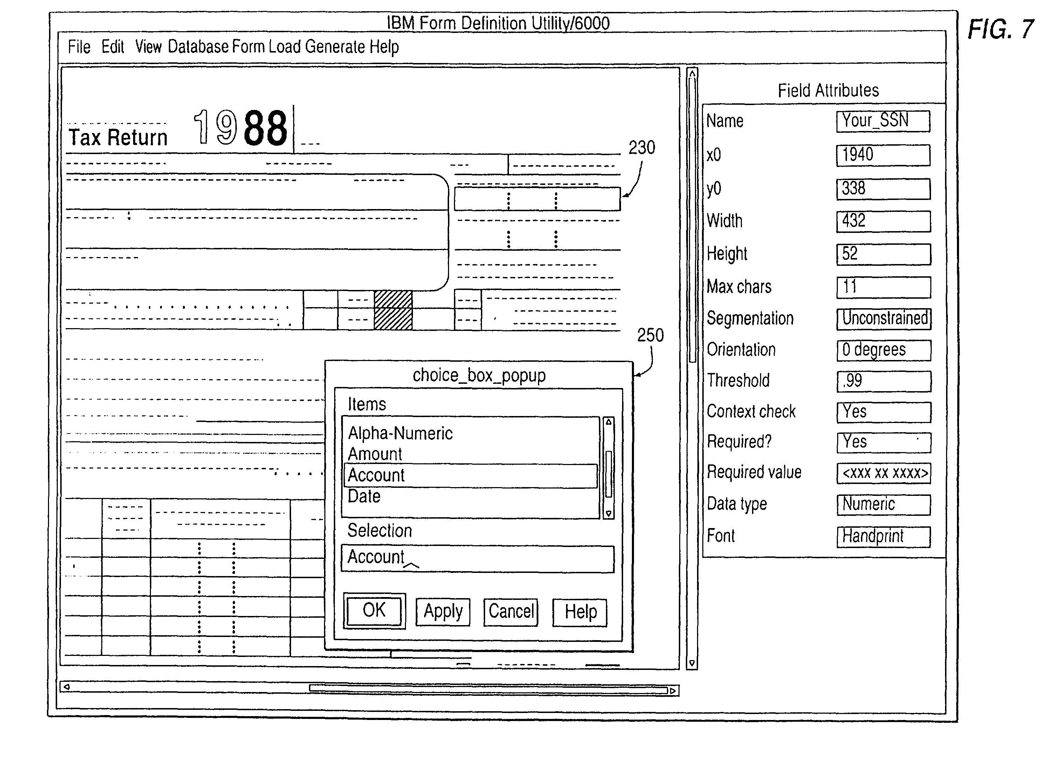

Fig. 1D is a flow diagram of the details of step 522 of Fig. 1B which can be implemented as computer program 104 to run on processor 100. Fig. 1D carries out the following steps.
- Step 522:: Converting the pointer device signal 120 into field location information for the first field and storing it in a first field attribute data set (from Fig. 1B).
- Step 550:: Displaying an editing window 109 and a field attribute window 111 on a display device 200 in the first processor 100 of Fig. 2.
- Step 552:: Providing alphanumeric display of field attributes 222 in the field attribute window 111 which include field location coordinates 221, 223, 225 and 227, of Fig. 2.
- Step 554:: Displaying in the editing window 109, the image of the document and providing a graphical depiction of a selection area 230 which is juxtaposed with the displayed image of the document and positioned at a location on the editing window 109 in response to the pointer device 120 signal input by user, of Fig. 7.
- Step 556:: Displaying in the field attribute window 111, an alphanumeric representation of coordinates 221, 223, 225 and 227 of the location of the selection area 230.
- Step 558:: Selectively storing the field attributes 221, 223, 225 and 227 displayed in the field attribute window 111, as the field attribute data set 105.

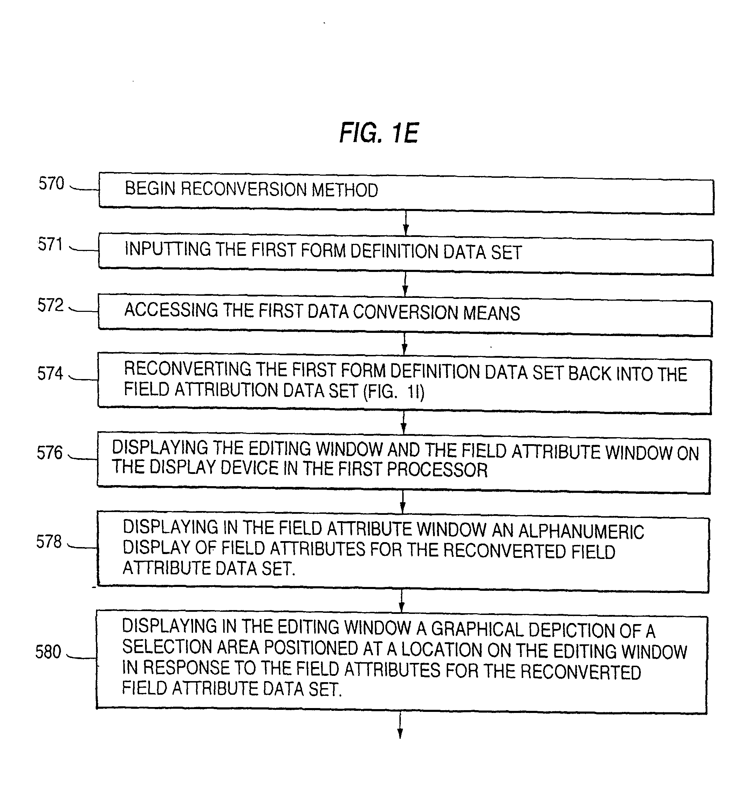

Fig. 1E is a flow diagram of the reconversion method which can be implemented as part of computer program 104 or 106 to run on processor 100. Fig. 1E carries out the following steps.
- Step 570:: Begin Reconversion Method in processor 100.
- Step 571:: Inputting the first form definition data set 190.
- Step 572:: Accessing the first data conversion means 106.
- Step 574:: Reconverting the first form definition data set 190 back into the field attribution data set 105 (Fig. 1I). This reconversion can be performed by the program shown in Fig. 1I.
- Step 576:: Displaying the editing window 109 and the field attribute window 111 on the display device in the first processor 100.
- Step 578:: Displaying in the field attribute window 111 an alphanumeric display of field attributes 222 for the reconverted field attribute data set 105.
- Step 580:: Displaying in the editing window 109 a graphical depiction of a selection area 230 positioned at a location on the editing window 109 in response to the field attributes 221, 223, 225 and 227 for the reconverted field attribute data set 105.

Fig. 1F is a flow diagram of the an alternate method to perform step 522 of Fig. 1B, using a line finding process, as described in the above referenced Casey, et al. patent, which can be implemented as a computer program 104 to run on processor 100. Fig. 1F carries out the following steps.
- Step 522:: Converting the pointer device 120 signal into field location information for the first field and storing it in a first field attribute data set 105 (from Fig. 1B).
- Step 590:: Performing a line finding process in the first processor 100, to locate bit-mapped images of horizontal and vertical lines enclosing boxes which depict fields in the bit-mapped image of the document displayed in the editing window 109.
- Step 592:: Identifying coordinates of the enclosed boxes as intersections of the horizontal and vertical lines found in step 590.
- Step 594:: Displaying in the field attribute window 111, an alphanumeric display of the coordinates of at least one of the enclosed boxes, as field attributes which include field location coordinates.
- Step 596:: Selectively storing the field attributes displayed in the field attribute window, as the field attribute data set 105.
- Step 598:: Displaying in the editing window 109 a graphical depiction 230 of at least one of the enclosed boxes, at a location established by the field location coordinates of step 592.

Fig. 1G is a flow diagram of the details of step 530 of Fig. 1C, the data conversion means 106, which can be implemented as a computer program 106 to run on processor 100. Fig. 1G carries out the following steps.
- Step 530:: Receive in the first processor 100, a first selection for the first character recognition program 162 and accessing the first data conversion means 106 to convert the first field attribution data set 105 into a first form definition data set 190 having the first format (from Fig. 1C).
- Step 600:: Character Recognition Program-A 162 selected.
- Step 602:: Branch to computer program subroutine-A 106 to convert the field attribution data set 105 into Format-A form definition data set 190.
- Step 604:: Begin with first field of form.
- Step 606:: Access field attribution data set 105 for field.
- Step 608:: Get values from field attribution data set for
field location
field name
field width
field height
maximum characters
segmentation
orientation
threshold
context check
required status
required value
data type
font
- Step 610:: Convert field location to Format-A field location
Convert field name to Format-A field name
Convert field width to Format-A field width
Convert field height to Format-A field height
Convert maximum characters to Format-A maximum character
Convert segmentation to Format-A segmentation
Convert orientation to Format-A orientation
Convert threshold to Format-A threshold
Convert context check to Format-A context check
Convert required status to Format-A required status
Convert required value to Format-A required value
Convert data type to Format-A data type
Convert font to Format-A font
- Step 612:: Store Format-A field definition data set for this field.
- Step 614:: Any more fields? If YES, go to step 606, else Step 616.
- Step 616:: Output all Format-A field definition data sets as Format-A form definition data set 190 for Character Recognition Program-A 162.

Fig. 1H is a flow diagram of the details of step 532 of Fig. 1C, the data conversion means 106', which can be implemented as a computer program 106' to run on processor 100. Fig. 1H carries out the following steps.
- Step 532:: Receive in the first processor 100, a second selection for the second character recognition program 162' and accessing the second data conversion means 106' to convert the first field attribution data set 105 into a second form definition data set 190' having the second format (from Fig. 1C).
- Step 700:: Character Recognition Program-B 162' selected.
- Step 702:: Branch to computer program subroutine-B 106' to convert the field attribution data set 105 into Format-B form definition data set 190'.
- Step 704:: Begin with first field of form.
- Step 706:: Access field attribution data set 105 for field.
- Step 708:: Get values from field attribution data set for
field location
field name
field width
field height
data type
font
- Step 710:: Convert field location to Format-B field location
Convert field name to Format-B field name
Convert field width to Format-B field width
Convert field height to Format-B field height
Convert data type to Format-B data type
Convert font to Format-B font
- Step 711:: Link to Subroutine-B" (Fig. 1J) for any user-defined modifications to Format-B.
- Step 712:: Store Format-B field definition data set for this field.
- Step 714:: Any more fields? If YES, go to step 706, else Step 716.
- Step 716:: Output all Format-B field definition data sets as Format-B form definition data set 190' for Character Recognition Program-B 162'.

Fig. 1I is a flow diagram of the details of the reconversion method of Fig. 1E, which can be implemented as part of computer program 106 to run on processor 100. Fig. 1I carries out the following steps.
- Step 574:: Reconverting the form definition data set 190' back into the field attribution data set 105 (from Fig. 1E).
- Step 800:: Select form definition data set Format-B 190' for reconversion of form definition data set input to first processor 100, into the corresponding plurality of field attribution data sets 105.
- Step 802:: Branch to computer program subroutine-B' 106' to reconvert the Format-B form definition data set 190' into the plurality of field attribution data sets 105.
- Step 804:: Begin with first field of form definition data set 190'.
- Step 806:: Access Format-B field definition data set for field.
- Step 808:: Get values from Format-B field definition data set for
Format-B field location
Format-B field name
Format-B field width
Format-B field height
Format-B data type
Format-B font
- Step 810:: Convert Format-B field location to field location.
Convert Format-B field name to field name
Convert Format-B field width to field width
Convert Format-B field height to field height
Convert Format-B data type to data type
Convert Format-B font to font
- Step 812:: Store field attribution data set 105 for this field.
- Step 814:: Any more fields? If YES, go to step 806, else Step 576.
- Step 576:: Display the editing window 109 and the field attribute window 111 on the display device 200 in the first processor 100.
- Step 578:: Display in the field attribute window 111 an alphanumeric display of field attributes 222 for the reconverted field attribute data set 105.
- Step 580:: Display in the editing window 109 a graphical depiction of a selection area 230 positioned at a location on the editing window in response to the field attributes for the reconverted field attribute data set 105.

Fig. 1J is a flow diagram of the details of linking to a user-defined subroutine to modify the format of a form definition data set, from Fig. 1H, which can be implemented as a computer program 104, or added by the user to customize the form definition data set, to run on processor 100. Fig. 1J carries out the following steps.
- Step 711:: Link to Subroutine-B" for any user-defined modifications to Format-B (from Fig. 1H).
- Step 900:: Begin Subroutine-B" for user-defined modifications to Format-B which flows alternately to either Step 902, 904, or 906.
- Step 902:: Example 1: No Changes
RETURN
- Step 904:: Example 2: Change
"Convert font to Format-B font"
to
"Convert font to Times Roman font"
RETURN
- Step 906:: Example 3: Add
"Convert orientation to Format-B orientation"
RETURN

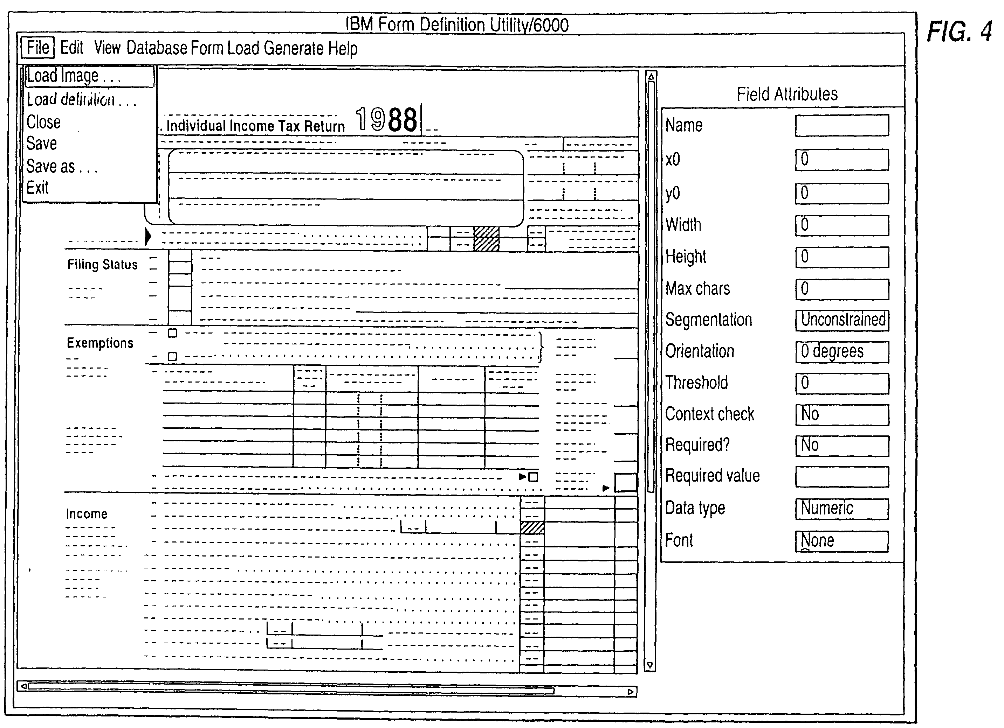

Fig. 2 shows the layout of the screen 200 for the examples shown in Figs. 4-8 and Figs. 10-12.

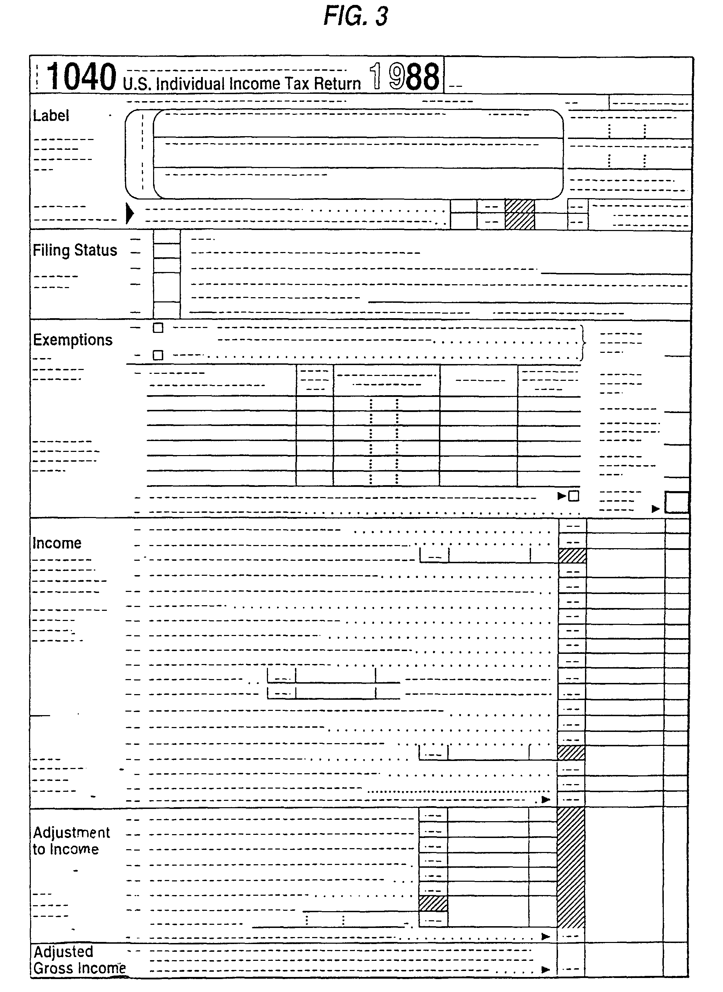

Fig. 3 shows the bit map image of the form to be defined, a 1988 IRS 1040 form, which has been scanned by scanner 112. This bit map may have been created by scanning a paper copy of a blank 1988 IRS 1040 form.

Fig. 4 shows the appearance of the display screen 118 and the contents of the display buffer 200, with the editing window 109 and the field attribute window 111, in accordance with the invention. It shows the the 1988 IRS 1040 form of Fig. 3 displayed in the image area of the screen. The bit map was loaded by selecting the "Load image" menu item from the "File" pulldown menu 203. To the right is the "Field Attributes" area 111 of the screen 200, which contains the default values for a field, since no fields have been defined yet.

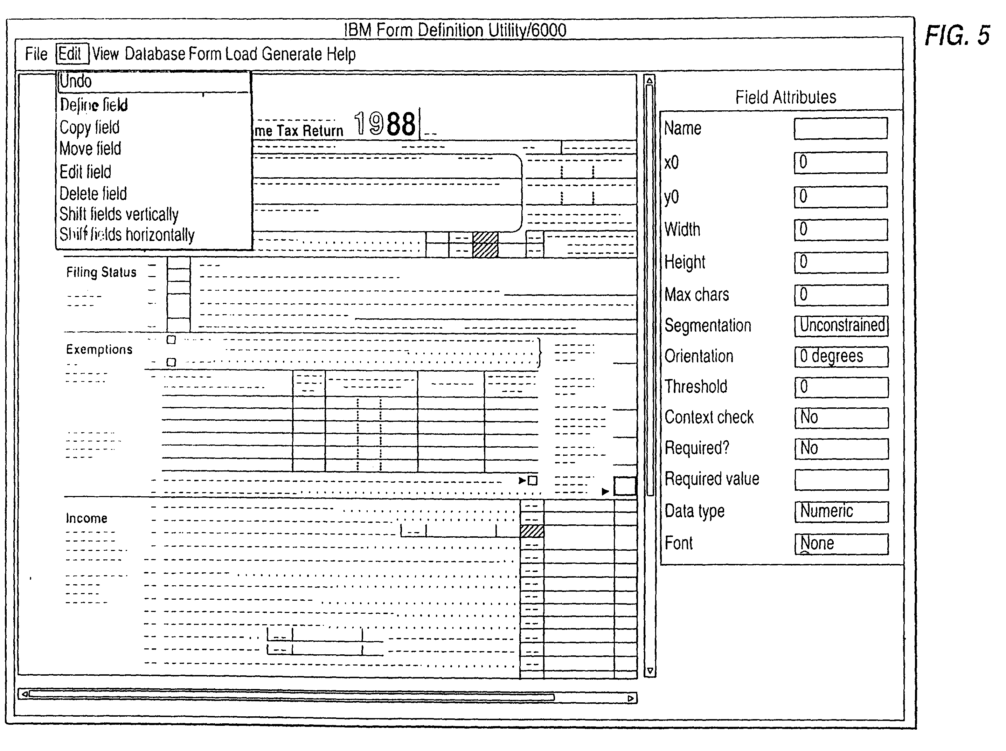

Fig. 5 shows the "Edit" pulldown menu 204 on edit window 109. The current choices for the "Edit" pulldown menu are:
- Undo - undo the last action performed
- Define field - begin defining new fields on the image
- Copy field - copy an existing field
- Move field - move an existing field
- Edit field - edit the attributes of an existing field
- Delete field - delete an existing field
- Shift fields vertically - shift all fields by a constant amount
- Shift fields horizontally - shift all fields by a constant amount

To begin defining fields, the operator or system administrator selects "Define field."

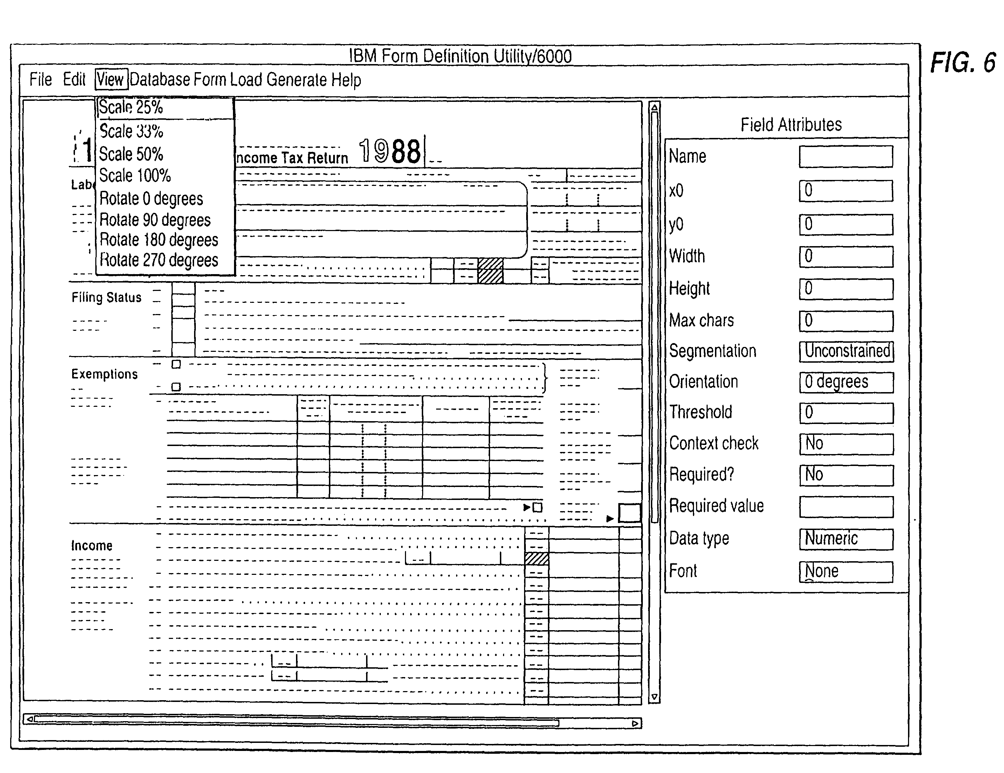

Fig. 6 shows the contents of the "View" pulldown menu 206 on edit window 109, which allows the operator to scale the image to different sizes. The default scaling is 33% (this can be changed by the operator). In this scenario, the operator selects the "Scale 50%" menu item, which re-scales the image to 50% magnification, and uses the scrollbars surrounding the image area to scroll to the upper right portion of the image. The result of these actions is depicted in Fig. 7, which shows the operator completing the definition of the first field on the image, that corresponding to the "Your social security number" area on the image of Fig. 3. The operator has used the mouse 120 to define a rectangular box 230 below the words "Your social security number" on the image in the edit window 109. This indicates the area of the image which is expected to contain the payer's social security number. The invention has automatically loaded the coordinates of rectangular region 230 in the "x0" 221, "y0" 223, "Width" 225 and "Height" 227 boxes in the "Field Attributes" area 111 of the screen. The box 230 begins at pixel location (1940, 338) and is 432 pixels wide by 52 pixels high. The operator has then entered data in the "Field Attributes" boxes 222 to the right of the image, as follows:
- The operator has named the field "Your_SSN" in 219.
- The operator has defined the maximum number of characters for this field to be 11 (9 digits plus 2 spaces for social security number) in 229.
- The operator has indicated the segmentation for the characters in the field is unconstrained in 231, i.e. there are no boxes in the field in which the payer is to enter each character.
- The operator has defined the orientation of the field with respect to that of the form to be 0 degrees in 233.
- The operator has defined the threshold of the characters in the field 235 to be 0.99. This value could be used by an OCR/ICR application to set the recognition threshold of the characters in that field. It is important to flag all possible characters about which the OCR/ICR application may not be sure, so the threshold is set high. The value 0.99 may be used to reject characters which are not 99% certain to be correct. This typically forces an operator to manually enter the character(s) in question. If the threshold were set low, there would be a higher probability that the OCR/ICR application might make a substitution mistake (say a "7" for a "1"), causing the payer's social security number to be captured incorrectly.
- The operator has defined context checking to be active for this field in 237. The OCR/ICR application may have field-level context checking to improve the accuracy of the recognition. For a social security number, for example, context checking cause the OCR/ICR application to attempt to output 3 digits, a space, 2 digits, a space, and 4 more digits.
- The operator has indicated that this field is required to contain data in 239. For an IRS 1040 form to be completed, for example, the payer must enter his/her social security number.
- The operator has further specified the content of the data required to be entered in this field in 241. Contained within the brackets is the syntax of a valid social security number: 3 digits, a space, 2 digits, a space, and 4 more digits. Should the data captured in this field not be in this format, the operator's application may reject the entire form, and cause an operator to inspect its contents. Instead of a valid syntax, the operator could enter a constant value in 241 that is required to be present, such as "1988" if the field had been defined to be the year of the IRS 1040 form, shown above the address portion of the form in Fig. 3.
- Skipping to the end 245, the operator has defined the font for this field to be "handprint."
- Shown on top of the image is a popup window 250 is displayed when the operator attempted to define the data type 243 for this field. For this attribute (as well as some of the other attributes), there is a fixed set of valid values. To force the operator to use a valid value, the invention displays a popup window whenever the operator attempts to enter or change data for these attributes. The data type shown in the field attribute box is "Numeric," the default value. Here the operator is changing the data type, and has selected "Account," which is a special data type for account fields. The operator's application may use the "Account" data type to specify the valid character set for data in this field, which may include the digits 0 through 9, plus spaces. The operator selects the "OK" button to change the data type to "Account."

The operator repeats this procedure for all the fields to be defined on the form. To save time, the invention preserves the attributes of the previously-defined field, so the operator need only change those attributes which differ from the previous field. The invention automatically enters the field coordinates in 221 and 223 for each field. The invention can also automatically assign a default name in 219 to each field, if so desired.

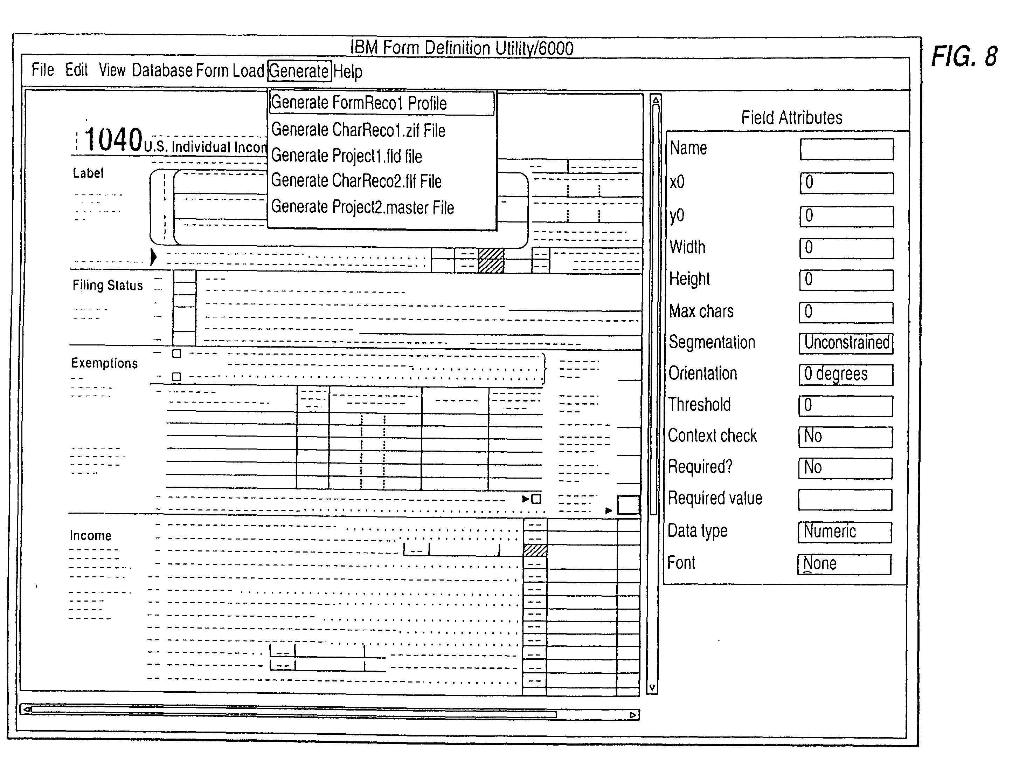

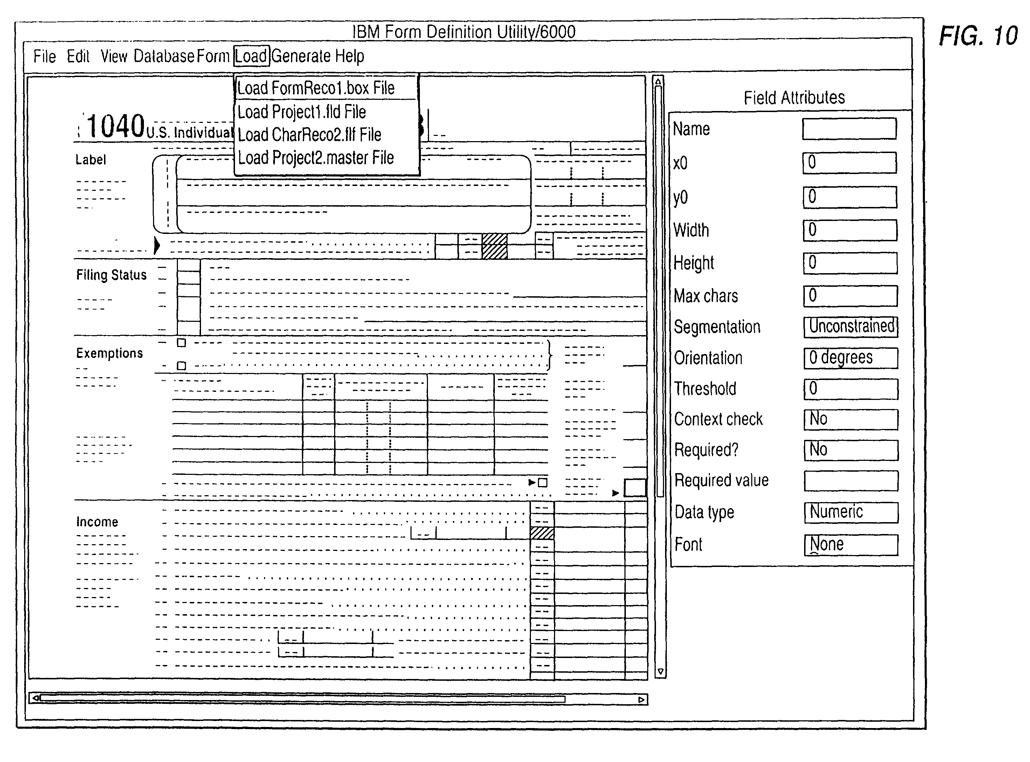

Fig. 8 shows the "Generate" pulldown menu 214 contents. The contents of this menu are defined by the operator, through the process described later in this document. In this scenario, the operator generates a "Project1 .fld" file by selecting the "Generate Project1 .fld File" menu item. The invention then calls the subroutine (specified the operator) to format the field attributes in the desired format. Fig. 9 shows the contents of the Projectl .fld file thus generated for the social security number field previously defined. The operator has specified that the Projectl .fld file format be as follows:
- The first line of the file contains the number of fields defined, "1."
- The following lines contain the field definition data, in the following format:
- name x0 y0 width height data type max_chars min_chars

Note that the data type is expressed differently, prefixed by the letters "FPM_," and capitalized. This is because this file is the form processing master file for Projectl. Note also that since the embodiment of the invention which generated the format of shown in Fig. 9, does not currently allow the operator to define the minimum number of characters in a field, the operator's subroutine writes a default value of 1. The format of this output file is entirely specified by the operator, through a subroutine which he/she writes. The operator can output all fields, one field, up to some number of fields, the same field n times, whatever is desired. This will be described in more detail later.

At this point, the operator might save the contents of the fields to a file. This is done by selecting the "Save as" pulldown menu item from the "File" pulldown menu 203, depicted in Fig. 4. All the field attributes of all the fields are saved in this file.

Fig. 10 shows the contents of the "Load" pulldown menu 212, which is also created by the operator. In addition to creating output files in any particular format, the invention allows the operator to read files in any particular format. The contents of such files are loaded into the field attributes 222 and displayed. The invention allows the operator to perform all the editing functions on the fields in window 109, and to then save the contents of the fields in either a) the internal format of the invention, b) the same format as that read in, or b) any other format available within the "Generate" pulldown menu 214.

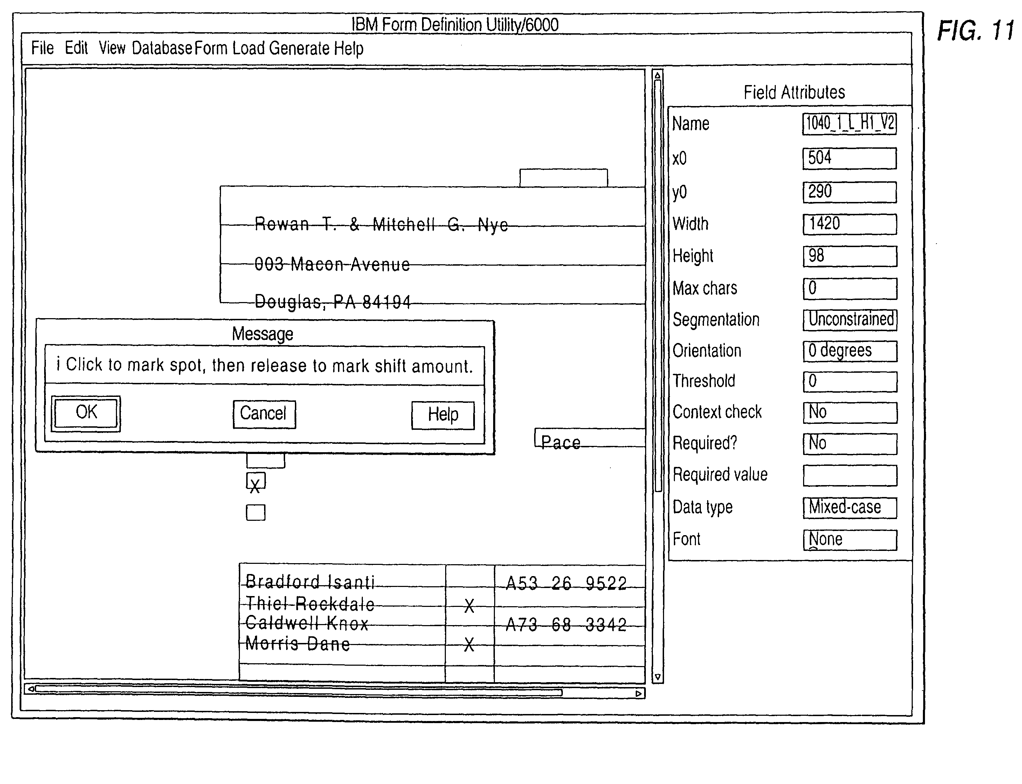

The scenario now changes to a later time in which the operator is inspecting the location of the fields previously defined for a field. This might occur should the OCR/ICR results be worse than expected, possibly indicating that the fields are not located properly. To do this, the operator loads an image in question, which may be one in which the form background has been electronically removed, leaving only the data entered by the user on the form. The screen 200 may now look like that in Fig. 11. Here the fields shown in edit window 109, which were previously defined for the form, are shifted vertically from their proper positions. Note that the "y0" coordinate 223 for the field "1040_1_L_H1_V2" (the first line of the address box) is "290." It can be seen that all fields are shifted by the same amount in edit window 109. To quickly remedy the problem, the operator selects the "Shift fields vertically" menu item from the "Edit" pulldown menu 204. This causes a popup window to appear (as shown in Fig. 11), asking the operator to indicate the vertical shift amount with the mouse 120. The operator can then click on the image, move the mouse by the desired vertical shift, and then release the mouse. The invention then shifts all fields on the image by that amount.

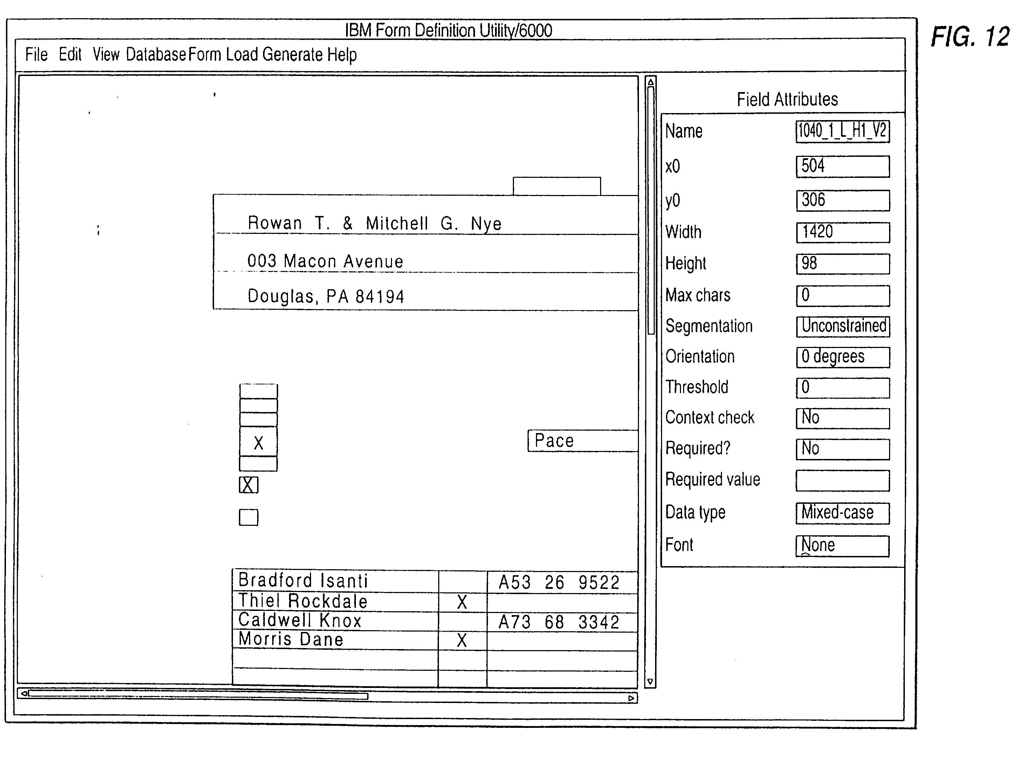

Fig. 12 shows the new location of the fields with respect to the image in edit window 109. It can be seen that the fields are now in alignment with the data on the image. Note that the "y0" coordinate 223 for the same field is now 306, indicating that the operator shifted the field down by 16 pixels. All other attributes of the field remain the same, as seen in 222. At this point the operator can save the field attributes and/or generate new field definition files.

Tables 1, 2, 3, and 4 show sample field definition files for the completed form definition of the image. Table 1 shows the "Project1 .fld" file, in the format previously described. Note that the 4th field from the top contains the field attributes of the "1040_1_L_H1_V2" field previously described, with a y0 of 306. Table 2 shows a sample field definition file for the "CharReco1 .zlf file format", which can be used to process this image on some vendor of products. Table 3 shows a sample field definition file for the "FormReco1 box" file format, which can be used to process the image with first IBM form recognition software. Table 4 shows a sample field definition file for the "CharReco2 .flf" file format, which can be used to process the image on the second IBM character recognition software.

Note that with these four different recognition implementations, only a small set of field attributes are required to process an image. The invention includes all of these attributes. Default values can be provided in some applications. In this last case, the operator has elected to output a default value for the minimum number of characters. Should it be determined that this field attribute is required by enough products, the invention can be extended to include this attribute, also.

Also note that the invention allows information about a particular form to be defined. This might include the form's width and height, the ink color on the form, the form name and year, etc.

Other enhancements to the invention include the following:
- an option to force the rectangular boxes defined by the user to align along a grid.
- an option to allow the operator to view the field attributes of all the fields at once, and to enter data or make global changes.
- an option to rotate the image 0, 90, 180, and 270 degrees.
- an option to allow the operator to modify the allowable choices for a field (e.g. add an extra data type).
- an option to allow the operator to add a new field attribute.

The ability of the invention to allow the operator to add field definition file formats is now described. The invention contains 2 parts: a compiled library which contains the windowing, editing, image handling, and field attribute code, and a "hook" or "exit" which allows the operator to attach specific customized code. This hook is shown in step 711 of Fig. 1H, which links to the subroutine B'' of Fig. 1J which contains the user defined custom code. Suitable pulldown menu items for the "Load" and "Generate" pulldown menus can also be provided. The operator has the option of adding code which builds the menu item and specifies the subroutine to call when that menu item is selected. The subroutine to be called is that which formats the data in the desired new format. To load a Project1 .fld file, for example,
- The operator adds a line of code to popup a file selection window for the "∗.fld" files (all files with the .fld extension). This window will then call the load_Project1() subroutine.

To generate a customized Project1 .fld file, for example, the operator first writes a subroutine which creates the Project1 .fld file format from the provided field and form attributes. The operator then adds a menu item to the "Generate" pulldown menu and specifies that the new subroutine should be invoked when this menu item is selected. The process of adding new file formats is completed by re-linking the invention's library of windowing, editing, image handling, and field attribute code with the operator's load and generate code.

The resulting invention provides a plurality of form definition data sets for enabling a given document form to be read by a corresponding plurality of character recognition programs. The invention enables a user to create a plurality of form definition data sets in a single working session, in a user friendly manner.

Although a specific embodiment of the invention has been disclosed, it will be understood by those having skill in the art that modifications can be made to that specific embodiment without departing from the scope of the invention.

**Table 1**

| | | | | | | | |
|---|---|---|---|---|---|---|---|
| 91 | | | | | | | |
| 1040_1_L_H1_V1 | 1230 | 258 | 214 | 50 | FPM_ALPHANUMERIC | 0 | 1 |
| 1040_1_L_H2_V1 | 1628 | 258 | 288 | 50 | FPM_ALPHANUMERIC | 0 | 1 |
| 1040_1_L_H3_V1 | 1964 | 258 | 108 | 50 | FPM_ALPHANUMERIC | 0 | 1 |
| 1040_1_L_H1_V2 | 504 | 306 | 1420 | 98 | FPM_ALPHA | 0 | 1 |
| 1040_1_L_H2_V2 | 1926 | 310 | 454 | 94 | FPM_ACCOUNT | 0 | 1 |
| 1040_1_L_H1_V3 | 504 | 404 | 1420 | 98 | FPM_ADDRBLOCK | 0 | 1 |
| 1040_1_L_H2_V3 | 1926 | 404 | 454 | 98 | FPM_ACCOUNT | 0 | 1 |
| 1040_1_L_H1_V4 | 504 | 502 | 1420 | 98 | FPM_ADDRBLOCK | 0 | 1 |
| 1040_1_L_H1_V5 | 1560 | 602 | 94 | 52 | FPM_MARKSENSE | 0 | 1 |
| 1040_1_L_H2_V5 | 1832 | 602 | 112 | 52 | FPM_MARKSENSE | 0 | 1 |
| 1040_1_L_H1_V6 | 1560 | 654 | 94 | 52 | FPM-MARKSENSE | 0 | 1 |
| 1040_1_L_H2_V6 | 1832 | 654 | 112 | 52 | FPM_MARKSENSE | 0 | 1 |
| 1040_1_1 | 568 | 708 | 96 | 50 | FPM_MARKSENSE | 0 | 1 |
| 1040_1_2 | 568 | 758 | 96 | 50 | FPM_MARKSENSE | 0 | 1 |
| 1040_1 3_H1 | 568 | 808 | 96 | 50 | FPM_MARKSENSE | 0 | 1 |
| 1040_1_3_H2 | 1842 | 786 | 538 | 70 | FPM_ALPHANUMERIC | 0 | 1 |
| 1040_1_4_H1 | 568 | 858 | 96 | 98 | FPM_MARKSENSE | 0 | 1 |
| 1040_1_4_H2 | 1272 | 908 | 1104 | 42 | FPM_ALPHA | 0 | 1 |
| 1040_1_5_H1 | 568 | 956 | 96 | 50 | FPM_MARKSENSE | 0 | 1 |
| 1040_1_5_H2 | 1622 | 954 | 78 | 50 | FPM_ALPHANUMERIC | 0 | 1 |
| 1040_1_6a | 570 | 1018 | 40 | 36 | FPM_MARKSENSE | 0 | 1 |
| 1040_1_6b_H1 | 570 | 1102 | 40 | 36 | FPM_MARKSENSE | 0 | 1 |
| 1040_1_6b_H2 | 2274 | 1028 | 105 | 94 | FPM-NUMERIC | 0 | 1 |
| 1040_1_6c_H1_V1 | 556 | 1247 | 498 | 50 | FPM_ALPHA | 0 | 1 |
| 1040_1_6c_H2_V1 | 1054 | 1247 | 120 | 50 | FPM_MARKSENSE | 0 | 1 |
| 1040_1_6c_H3_V1 | 1174 | 1247 | 358 | 50 | FPM_ACCOUNT | 0 | 1 |
| 1040_1_6c_H4_V1 | 1532 | 1247 | 254 | 50 | FPM_ALPHA | 0 | 1 |
| 1040_1_6c_H5_V1 | 1786 | 1247 | 194 | 50 | FPM_NUMERIC | 0 | 1 |
| 1040_1_6c_H6_V1 | 2274 | 1132 | 105 | 166 | FPM_NUMERIC | 0 | 1 |
| 1040_1_6c_H1_V2 | 556 | 1297 | 498 | 50 | FPM_ALPHA | 0 | 1 |
| 1040_1_6c_H2_V2 | 1054 | 1297 | 120 | 50 | FPM_MARKSENSE | 0 | 1 |
| 1040_1_6c_H3_V2 | 1174 | 1297 | 358 | 50 | FPM_ACCOUNT | 0 | 1 |
| 1040_1_6c_H4_V2 | 1532 | 1297 | 254 | 50 | FPM_ALPHA | 0 | 1 |
| 1040_1_6c_H5_V2 | 1786 | 1297 | 194 | 50 | FPM_NUMERIC | 0 | 1 |
| 1040_1_6c_H6_V2 | 2274 | 1304 | 105 | 98 | FPM_NUMERIC | 0 | 1 |
| 1040_1_6c_H1_V3 | 556 | 1347 | 498 | 50 | FPM_ALPHA | 0 | 1 |
| 1040_1_6c_H2_V3 | 1054 | 1347 | 120 | 50 | FPM_MARKSENSE | 0 | 1 |
| 1040_1_6c_H3_V3 | 1174 | 1347 | 358 | 50 | FPM_ACCOUNT | 0 | 1 |
| 1040_1_6c_H4_V3 | 1532 | 1347 | 254 | 50 | FPM_ALPHA | 0 | 1 |
| 1040_1_6c_H5_V3 | 1786 | 1347 | 194 | 50 | FPM_NUMERIC | 0 | 1 |
| 1040_1_6c_H6_V3 | 2274 | 1408 | 105 | 104 | FPM_NUMERIC | 0 | 1 |
| 1040_1_6c_H1_V4 | 556 | 1397 | 498 | 50 | FPM_ALPHA | 0 | 1 |
| 1040_1_6c_H2_V4 | 1054 | 1397 | 120 | 50 | FPM_MARKSENSE | 0 | 1 |
| 1040_1_6c_H3_V4 | 1174 | 1397 | 358 | 50 | FPM_ACCOUNT | 0 | 1 |
| 1040_1_6c_H4_V4 | 1532 | 1397 | 254 | 50 | FPM_ALPHA | 0 | 1 |
| 1040_1_6c_H5_V4 | 1786 | 1397 | 194 | 50 | FPM_NUMERIC | 0 | 1 |
| 1040_1_6c_H1_V5 | 556 | 1447 | 498 | 50 | FPM_ALPHANUMERIC | 0 | 1 |
| 1040_1_6c_H2_V5 | 1054 | 1447 | 120 | 50 | FPM_MARKSENSE | 0 | 1 |
| 1040_1_6c_H3_V5 | 1174 | 1447 | 358 | 50 | FPM_ACCOUNT | 0 | 1 |
| 1040_1_6c_H4_V5 | 1532 | 1447 | 254 | 50 | FPM_ALPHANUMERIC | 0 | 1 |
| 1040_1_6c_H5_V5 | 1786 | 1447 | 194 | 50 | FPM_NUMERIC | 0 | 1 |
| 1040_1_6c_H1_V6 | 556 | 1497 | 498 | 50 | FPM_ALPHANUMERIC | 0 | 1 |
| 1040 1_6c_H2_V6 | 1054 | 1497 | 120 | 50 | FPM_MARKSENSE | 0 | 1 |
| 1040_1_6c_H3_V6 | 1174 | 1497 | 358 | 50 | FPM_ACCOUNT | 0 | 1 |
| 1040_1_6c_H4_V6 | 1532 | 1497 | 254 | 50 | FPM_ALPHANUMERIC | 0 | 1 |
| 1040_1_6c_H5_V6 | 1786 | 1497 | 194 | 50 | FPM_NUMERIC | 0 | 1 |
| 1040_1_6d | 1952 | 1556 | 36 | 32 | FPM_MARKSENSE | 0 | 1 |
| 1040_1_6e | 2274 | 1560 | 105 | 72 | FPM_NUMERIC | 0 | 1 |
| 1040_1_7 | 2016 | 1646 | 370 | 50 | FPM_AMOUNT | 0 | 1 |
| 1040_1_8a | 2016 | 1696 | 370 | 52 | FPM_AMOUNT | 0 | 1 |
| 1040_1_8b | 1562 | 1748 | 368 | 50 | FPM_AMOUNT | 0 | 1 |
| 1040_1_9 | 2016 | 1748 | 370 | 102 | FPM_AMOUNT | 0 | 1 |
| 1040_1_10 | 2016 | 1852 | 370 | 50 | FPM_AMOUNT | 0 | 1 |
| 1040_1_11 | 2016 | 1902 | 370 | 50 | FPM_AMOUNT | 0 | 1 |
| 1040_1_12 | 2016 | 1952 | 370 | 50 | FPM_AMOUNT | 0 | 1 |
| 1040_1_13 | 2016 | 2002 | 370 | 50 | FPM_AMOUNT | 0 | 1 |
| 1040_1_14 | 2016 | 2052 | 370 | 50 | FPM_AMOUNT | 0 | 1 |
| 1040_1_15 | 2016 | 2102 | 370 | 50 | FPM_AMOUNT | 0 | 1 |
| 1040_1_16a | 1056 | 2152 | 366 | 50 | FPM_AMOUNT | 0 | 1 |
| 1040_1_16b | 2016 | 2152 | 370 | 50 | FPM_AMOUNT | 0 | 1 |
| 1040_1_17a | 1058 | 2202 | 366 | 50 | FPM_AMOUNT | 0 | 1 |
| 1040_1_17b | 2016 | 2202 | 370 | 50 | FPM_AMOUNT | 0 | 1 |
| 1040_1_18 | 2016 | 2252 | 370 | 50 | FPM_AMOUNT | 0 | 1 |
| 1040_1_19 | 2016 | 2302 | 370 | 50 | FPM_AMOUNT | 0 | 1 |
| 1040_1_20 | 2016 | 2352 | 370 | 50 | FPM_AMOUNT | 0 | 1 |
| 1040_1_21a | 1564 | 2402 | 370 | 50 | FPM_AMOUNT | 0 | 1 |
| 1040_1_21b | 2016 | 2402 | 370 | 96 | FPM_AMOUNT | 0 | 1 |
| 1040_1_22_H1 | 1280 | 2498 | 654 | 50 | FPM_ALPHANUMERIC | 0 | 1 |
| 1040_1_22_H2 | 2016 | 2498 | 370 | 50 | FPM_AMOUNT | 0 | 1 |
| 1040_1_23 | 2016 | 2548 | 370 | 50 | FPM_AMOUNT | 0 | 1 |
| 1040_1_24 | 1566 | 2598 | 370 | 50 | FPM_AMOUNT | 0 | 1 |
| 1040_1_25a | 1566 | 2648 | 370 | 50 | FPM_AMOUNT | 0 | 1 |
| 1040_1_25b | 1566 | 2698 | 370 | 50 | FPM_AMOUNT | 0 | 1 |
| 1040_1_26 | 1566 | 2748 | 370 | 50 | FPM_AMOUNT | 0 | 1 |
| 1040_1_27 | 1566 | 2798 | 370 | 50 | FPM_AMOUNT | 0 | 1 |
| 1040_1_28 | 1566 | 2848 | 370 | 50 | FPM_AMOUNT | 0 | 1 |
| 1040_1_29_V1 | 1062 | 2902 | 410 | 50 | FPM_ALPHANUMERIC | 0 | 1 |
| 1040_1_29_H1_V2 | 878 | 2952 | 590 | 50 | FPM_ACCOUNT | 0 | 1 |
| 1040_1_29_H2_V2 | 1566 | 2898 | 370 | 100 | FPM_AMOUNT | 0 | 1 |
| 1040_1_30 | 2016 | 2608 | 370 | 446 | FPM_AMOUNT | 0 | 1 |
| 1040_1_31 | 2016 | 3054 | 370 | 100 | FPM_ACCOUNT | 0 | 1 |

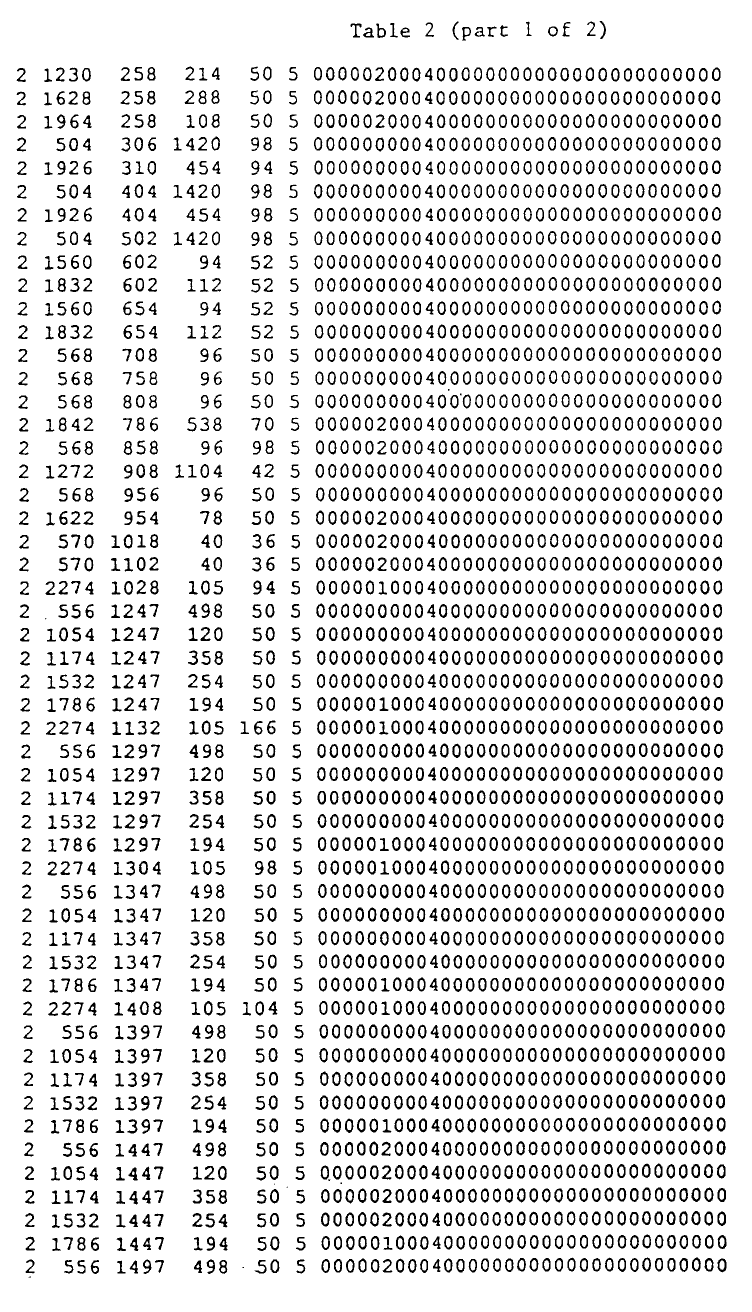

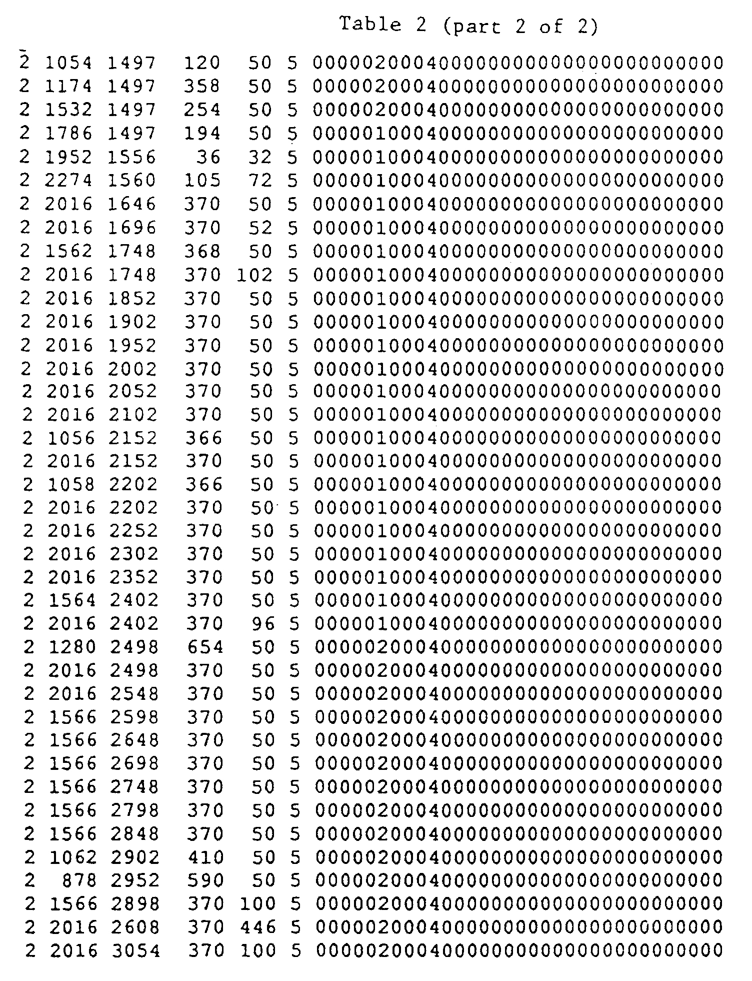

**Table 3**

| | | | | |
|---|---|---|---|---|
| X | 1230 | 258 | 214 | 50 |
| X | 1628 | 258 | 288 | 50 |
| X | 1964 | 258 | 108 | 50 |
| X | 504 | 306 | 1420 | 98 |
| X | 1926 | 310 | 454 | 94 |
| X | 504 | 404 | 1420 | 98 |
| X | 1926 | 404 | 454 | 98 |
| X | 504 | 502 | 1420 | 98 |
| X | 1560 | 602 | 94 | 52 |
| X | 1832 | 602 | 112 | 52 |
| X | 1560 | 654 | 94 | 52 |
| X | 1832 | 654 | 112 | 52 |
| X | 568 | 708 | 96 | 50 |
| X | 568 | 758 | 96 | 50 |
| X | 568 | 808 | 96 | 50 |
| X | 1842 | 786 | 538 | 70 |
| X | 568 | 858 | 96 | 98 |
| X | 1272 | 908 | 1104 | 42 |
| X | 568 | 956 | 96 | 50 |
| X | 1622 | 954 | 78 | 50 |
| X | 570 | 1018 | 40 | 36 |
| X | 570 | 1102 | 40 | 36 |
| X | 2274 | 1028 | 105 | 94 |
| X | 556 | 1247 | 498 | 50 |
| X | 1054 | 1247 | 120 | 50 |
| X | 1174 | 1247 | 358 | 50 |
| X | 1532 | 1247 | 254 | 50 |
| X | 1786 | 1247 | 194 | 50 |
| X | 2274 | 1132 | 105 | 166 |
| X | 556 | 1297 | 498 | 50 |
| X | 1054 | 1297 | 120 | 50 |
| X | 1174 | 1297 | 358 | 50 |
| X | 1532 | 1297 | 254 | 50 |
| X | 1786 | 1297 | 194 | 50 |
| X | 2274 | 1304 | 105 | 98 |
| X | 556 | 1347 | 498 | 50 |
| X | 1054 | 1347 | 120 | 50 |
| X | 1174 | 1347 | 358 | 50 |
| X | 1532 | 1347 | 254 | 50 |
| X | 1786 | 1347 | 194 | 50 |
| X | 2274 | 1408 | 105 | 104 |
| X | 556 | 1397 | 498 | 50 |
| X | 1054 | 1397 | 120 | 50 |
| X | 1174 | 1397 | 358 | 50 |
| X | 1532 | 1397 | 254 | 50 |
| X | 1786 | 1397 | 194 | 50 |
| X | 556 | 1447 | 498 | 50 |
| X | 1054 | 1447 | 120 | 50 |
| X | 1174 | 1447 | 358 | 50 |
| X | 1532 | 1447 | 254 | 50 |
| X | 1786 | 1447 | 194 | 50 |
| X | 556 | 1497 | 498 | 50 |
| X | 1054 | 1497 | 120 | 50 |
| X | 1174 | 1497 | 358 | 50 |
| X | 1532 | 1497 | 254 | 50 |
| X | 1786 | 1497 | 194 | 50 |
| X | 1952 | 1556 | 36 | 32 |
| X | 2274 | 1560 | 105 | 72 |
| X | 2016 | 1646 | 370 | 50 |
| X | 2016 | 1696 | 370 | 52 |
| X | 1562 | 1748 | 368 | 50 |
| X | 2016 | 1748 | 370 | 102 |
| X | 2016 | 1852 | 370 | 50 |
| X | 2016 | 1902 | 370 | 50 |
| X | 2016 | 1952 | 370 | 50 |
| X | 2016 | 2002 | 370 | 50 |
| X | 2016 | 2052 | 370 | 50 |
| X | 2016 | 2102 | 370 | 50 |
| X | 1056 | 2152 | 366 | 50 |
| X | 2016 | 2152 | 370 | 50 |
| X | 1058 | 2202 | 366 | 50 |
| X | 2016 | 2202 | 370 | 50 |
| X | 2016 | 2252 | 370 | 50 |
| X | 2016 | 2302 | 370 | 50 |
| X | 2016 | 2352 | 370 | 50 |
| X | 1564 | 2402 | 370 | 50 |
| X | 2016 | 2402 | 370 | 96 |
| X | 1280 | 2498 | 654 | 50 |
| X | 2016 | 2498 | 370 | 50 |
| X | 2016 | 2548 | 370 | 50 |
| X | 1566 | 2598 | 370 | 50 |
| X | 1566 | 2648 | 370 | 50 |
| X | 1566 | 2698 | 370 | 50 |
| X | 1566 | 2748 | 370 | 50 |
| X | 1566 | 2798 | 370 | 50 |
| X | 1566 | 2848 | 370 | 50 |
| X | 1062 | 2902 | 410 | 50 |
| X | 878 | 2952 | 590 | 50 |
| X | 1566 | 2898 | 370 | 100 |
| X | 2016 | 2608 | 370 | 446 |
| X | 2016 | 3054 | 370 | 100 |

**Table 4**

| | | | | | |
|---|---|---|---|---|---|
| 1230 | 258 | 1444 | 308 | ALPHA_NUMERIC | 1040_1_L_H1_V1 |
| 1628 | 258 | 1916 | 308 | ALPHA_NUMERIC | 1040_1_L_H2_V1 |
| 1964 | 258 | 2072 | 308 | ALPHA_NUMERIC | 1040_1_L_H3_V1 |
| 504 | 306 | 1924 | 404 | MIXED_CASE | 1040_1_L_H1_V2 |
| 1926 | 310 | 2380 | 404 | ACCOUNT | 1040_1_L_H2_V2 |
| 504 | 404 | 1924 | 502 | ADDRESS | 1040_1_L_H1_V3 |
| 1926 | 404 | 2380 | 502 | ACCOUNT | 1040_1_L_H2_V3 |
| 504 | 502 | 1924 | 600 | ADDRESS | 1040_1_L_H1_V4 |
| 1560 | 602 | 1654 | 654 | MARK_SENSE | 1040_1_L_H1_V5 |
| 1832 | 602 | 1944 | 654 | MARK_SENSE | 1040_1_L_H2_V5 |
| 1560 | 654 | 1654 | 706 | MARK_SENSE | 1040_1_L_H1_V6 |
| 1832 | 654 | 1944 | 706 | MARK_SENSE | 1040_1_L_H2_V6 |
| 568 | 708 | 664 | 758 | MARK_SENSE | 1040_1_1 |
| 568 | 758 | 664 | 808 | MARK_SENSE | 1040_1_2 |
| 568 | 808 | 664 | 858 | MARK_SENSE | 1040_1_3_H1 |
| 1842 | 786 | 2380 | 856 | ALPHA_NUMERIC | 1040_1_3_H2 |
| 568 | 858 | 664 | 956 | MARK_SENSE | 1040_1_4_H1 |
| 1272 | 908 | 2376 | 950 | MIXED_CASE | 1040_1_4_H2 |
| 568 | 956 | 664 | 1006 | MARK_SENSE | 1040_1_5_H1 |
| 1622 | 954 | 1700 | 1004 | ALPHA_NUMERIC | 1040_1_5_H2 |
| 570 | 1018 | 610 | 1054 | MARK_SENSE | 1040_1_6a |
| 570 | 1102 | 610 | 1138 | MARK_SENSE | 1040_1_6b_H1 |
| 2274 | 1028 | 2379 | 1122 | NUMERIC | 1040_1_6b_H2 |
| 556 | 1247 | 1054 | 1297 | MIXED_CASE | 1040_1_6c_H1_V1 |
| 1054 | 1247 | 1174 | 1297 | MARK_SENSE | 1040_1_6c_H2_V1 |
| 1174 | 1247 | 1532 | 1297 | ACCOUNT | 1040_1_6c_H3_V1 |
| 1532 | 1247 | 1786 | 1297 | MIXED_CASE | 1040_1_6c_H4_V1 |
| 1786 | 1247 | 1980 | 1297 | NUMERIC | 1040_1_6c_H5_V1 |
| 2274 | 1132 | 2379 | 1298 | NUMERIC | 1040_1_6c_H6_V1 |
| 556 | 1297 | 1054 | 1347 | MIXED_CASE | 1040_1_6c_H1_V2 |
| 1054 | 1297 | 1174 | 1347 | MARK_SENSE | 1040_1_6c_H2_V2 |
| 1174 | 1297 | 1532 | 1347 | ACCOUNT | 1040_1_6c_H3_V2 |
| 1532 | 1297 | 1786 | 1347 | MIXED_CASE | 1040_1_6c_H4_V2 |
| 1786 | 1297 | 1980 | 1347 | NUMERIC | 1040_1_6c_H5_V2 |
| 2274 | 1304 | 2379 | 1402 | NUMERIC | 1040_1_6c_H6_V2 |
| 556 | 1347 | 1054 | 1397 | MIXED_CASE | 1040_1_6c_H1_V3 |
| 1054 | 1347 | 1174 | 1397 | MARK_SENSE | 1040_1_6c_H2_V3 |
| 1174 | 1347 | 1532 | 1397 | ACCOUNT | 1040_1_6c_H3_V3 |
| 1532 | 1347 | 1786 | 1397 | MIXED_CASE | 1040_1_6c_H4_V3 |
| 1786 | 1347 | 1980 | 1397 | NUMERIC | 1040_1_6c_H5_V3 |
| 2274 | 1408 | 2379 | 1512 | NUMERIC | 1040_1_6c_H6_V3 |
| 556 | 1397 | 1054 | 1447 | MIXED_CASE | 1040_1_6c_H1_V4 |
| 1054 | 1397 | 1174 | 1447 | MARK_SENSE | 1040_1_6c_H2_V4 |
| 1174 | 1397 | 1532 | 1447 | ACCOUNT | 1040_1_6c_H3_V4 |
| 1532 | 1397 | 1786 | 1447 | MIXED_CASE | 1040_1_6c_H4_V4 |
| 1786 | 1397 | 1980 | 1447 | NUMERIC | 1040_1_6c_H5_V4 |
| 556 | 1447 | 1054 | 1497 | ALPHA_NUMERIC | 1040_1_6c_H1_V5 |
| 1054 | 1447 | 1174 | 1497 | MARK_SENSE | 1040_1_6c_H2_V5 |
| 1174 | 1447 | 1532 | 1497 | ACCOUNT | 1040_1_6c_H3_V5 |
| 1532 | 1447 | 1786 | 1497 | ALPHA_NUMERIC | 1040_1_6c_H4_V5 |
| 1786 | 1447 | 1980 | 1497 | NUMERIC | 1040_1_6c_H5_V5 |
| 556 | 1497 | 1054 | 1547 | ALPHA_NUMERIC | 1040_1_6c_H1_V6 |
| 1054 | 1497 | 1174 | 1547 | MARK_SENSE | 1040_1_6c_H2_V6 |
| 1174 | 1497 | 1532 | 1547 | ACCOUNT | 1040_1_6c_H3_V6 |
| 1532 | 1497 | 1786 | 1547 | ALPHA_NUMERIC | 1040_1_6c_H4_V6 |
| 1786 | 1497 | 1980 | 1547 | NUMERIC | 1040_1_6c_H5_V6 |
| 1952 | 1556 | 1988 | 1588 | MARK_SENSE | 1040_1_6d |
| 2274 | 1560 | 2379 | 1632 | NUMERIC | 1040_1_6e |
| 2016 | 1646 | 2386 | 1696 | AMOUNT | 1040_1_7 |
| 2016 | 1696 | 2386 | 1748 | AMOUNT | 1040_1_8a |
| 1562 | 1748 | 1930 | 1798 | AMOUNT | 1040_1_8b |
| 2016 | 1748 | 2386 | 1850 | AMOUNT | 1040_1_9 |
| 2016 | 1852 | 2386 | 1902 | AMOUNT | 1040_1_10 |
| 2016 | 1902 | 2386 | 1952 | AMOUNT | 1040_1_11 |
| 2016 | 1952 | 2386 | 2002 | AMOUNT | 1040_1_12 |
| 2016 | 2002 | 2386 | 2052 | AMOUNT | 1040_1_13 |
| 2016 | 2052 | 2386 | 2102 | AMOUNT | 1040_1_14 |
| 2016 | 2102 | 2386 | 2152 | AMOUNT | 1040_1_15 |
| 1056 | 2152 | 1422 | 2202 | AMOUNT | 1040_1_16a |
| 2016 | 2152 | 2386 | 2202 | AMOUNT | 1040_1_16b |
| 1058 | 2202 | 1424 | 2252 | AMOUNT | 1040_1_17a |
| 2016 | 2202 | 2386 | 2252 | AMOUNT | 1040_1_17b |
| 2016 | 2252 | 2386 | 2302 | AMOUNT | 1040_1_18 |
| 2016 | 2302 | 2386 | 2352 | AMOUNT | 1040_1_19 |
| 2016 | 2352 | 2386 | 2402 | AMOUNT | 1040_1_20 |
| 1564 | 2402 | 1934 | 2452 | AMOUNT | 1040_1_21a |
| 2016 | 2402 | 2386 | 2498 | AMOUNT | 1040_1_21b |
| 1280 | 2498 | 1934 | 2548 | ALPHA NUMERIC | 1040_1_22_H1 |
| 2016 | 2498 | 2386 | 2548 | AMOUNT | 1040_1_22_H2 |
| 2016 | 2548 | 2386 | 2598 | AMOUNT | 1040_1_23 |
| 1566 | 2598 | 1936 | 2648 | AMOUNT | 1040_1_24 |
| 1566 | 2648 | 1936 | 2698 | AMOUNT | 1040_1_25a |
| 1566 | 2698 | 1936 | 2748 | AMOUNT | 1040_1_25b |
| 1566 | 2748 | 1936 | 2798 | AMOUNT | 1040_1_26 |
| 1566 | 2798 | 1936 | 2848 | AMOUNT | 1040_1_27 |
| 1566 | 2848 | 1936 | 2898 | AMOUNT | 1040_1_28 |
| 1062 | 2902 | 1472 | 2952 | ALPHA_NUMERIC | 1040_1_29_V1 |
| 878 | 2952 | 1468 | 3002 | ACCOUNT | 1040_1_29_H1_V2 |
| 1566 | 2898 | 1936 | 2998 | AMOUNT | 1040_1_29_H2_V2 |
| 2016 | 2608 | 2386 | 3054 | AMOUNT | 1040_1_30 |
| 2016 | 3054 | 2386 | 3154 | AMOUNT | 1040_1_31 |

## Claims

1. In a data processing system including a processor means to receive an image of an original document form, the document form having a plurality of fields for inscribing characters on the form, said processor means including a plurality of character recognition programs, with each character recognition program using a corresponding form definition data set composed of a plurality of field definition data sets, one for each of said plurality of fields on said original document form, with a first one of said plurality of character recognition programs using a first format for form definition data sets, and a second one of said plurality of character recognition programs using a second format for form definition data sets, a method for enabling said plurality of character recognition programs to recognize characters inscribed on a filled out version of said document form, comprising the steps of:
storing a first data conversion means in said processor means, to convert a field attribution data set into said first format for a form definition data set;
storing a second data conversion means in said processor means, to convert a field attribution data set into said second format for a form definition data set;
inputting to said processor means an image of said original document form;
defining in said processor means a plurality of field attribute data sets, one for each of said plurality of fields on said form;
receiving a signal in said defining step, indicating a location of a first one of said plurality of fields on said image of said original document form;
converting said signal in said defining step, into field location information for said first field and storing it in a first field attribute data set;
receiving in said processor means, a first selection for said first character recognition program and accessing said first data conversion means to convert said first field attribute data set into a first form definition data set having said first format;
receiving in said processor means, a second selection for said second character recognition program and accessing said second data conversion means to convert said first field attribute data set into a second form definition data set having said second format;
receiving in said processor means an image of a filled out version of said document form;
performing character recognition on said filled out version of the document in said processor means with said first one of said plurality of character recognition programs using said first form definition data set, and
performing character recognition on said filled out version of the document in said processor means with said second one of said plurality of character recognition programs using said second form definition data set;
outputting a first character representation from said processor means using said first character recognition program; and
outputting a second character representation from said processor means using said second character recognition program.

2. In a data processing system including a first processor coupled to a second processor,
the first processor including a document scanner to receive an image of an original document form, the document form having a plurality of fields for inscribing characters on the form,
the second processor including a plurality of character recognition programs, with each character recognition program using a corresponding form definition data set composed of a plurality of field definition data sets, one for each of said plurality of fields on said original document form,
with a first one of said plurality of character recognition programs using a first format for form definition data sets, and
a second one of said plurality of character recognition programs using a second format for form definition data sets,
a method for enabling said plurality of character recognition programs to recognize characters inscribed on a filled out version of said document form, comprising the steps of:
storing a first data conversion means in said first processor, to convert a field attribution data set into said first format for a form definition data set;
storing a second data conversion means in said first processor, to convert a field attribution data set into said second format for a form definition data set;
scanning into said first processor an image of said original document form;
defining in said first processor a plurality of field attribute data sets, one for each of said plurality of fields on said form;
said defining step comprising:
receiving a pointer device signal indicating a location of a first one of said plurality of fields on said image of said original document form;
converting said pointer device signal into field location information for said first field and storing it in a first field attribute data set;
receiving attribute information for said first field and storing it in said first field attribute data set; and
said attribute information including expected data type information and expected data format information;
the method further comprising the steps of:
receiving in said first processor, a first selection for said first character recognition program and accessing said first data conversion means to convert said first field attribution data set into a first form definition data set having said first format;
receiving in said first processor, a second selection for said second character recognition program and accessing said second data conversion means to convert said first field attribution data set into a second form definition data set having said second format;
transferring said first and second form definition data sets to said second processor;
receiving in said second processor an image of a filled out version of said document form;
performing character recognition on said filled out version of the document in said second processor with said first one of said plurality of character recognition programs using said first form definition data set, and
performing character recognition on said filled out version of the document in said second processor with said second one of said plurality of character recognition programs using said second form definition data set;
outputting a first character representation from said second processor using said first character recognition program; and
outputting a second character representation from said second processor using said second character recognition program.

3. The method of claim 1 or 2, which further comprises:
said first data conversion means to convert said field attribution data set into said first form definition data set is a first data mapping table and/or a first computer program subroutine stored in said processor means, and
said second data conversion means to convert said field attribution data set into said second form definition data set is a second data mapping table and/or a second computer program subroutine stored in said processor means.

4. The method according to any one of the above claims wherein said defining step further comprises:
displaying an editing window and a field attribute window on a display device in said processor means;
said field attribute window providing alphanumeric display of field attributes which include field location coordinates;
said editing window displaying said image of said document and providing a graphical depiction of a selection area which is juxtaposed with said displayed image of said document and positioned at a location on said editing window in response to said signal;
said field attribute window displaying an alphanumeric representation of coordinates of said location of said selection area;
selectively storing said field attributes displayed in said field attribute window, as said field attribute data set.

5. The method according to any one of the above claims, wherein said defining step further comprises:
said attributes further include field name, field width, field height, maximum characters, segmentation, orientation, threshold, context check, required status, required value, data type and font.

6. The method according to any one of the above claims, which further comprises:
storing a third data conversion means in said processor means, to convert a field attribution data set into a modified version of said first format for a form definition data set;
said third data conversion means substituting for said first data conversion means;
accessing said third data conversion means to convert said first field attribution data set into a first form definition data set having said modified version of said first format.

7. The method of claim 6, which further comprises:
said third data conversion means to convert said field attribution data set into said modified version of said first form definition data set is a third computer program subroutine stored in said processor means.

8. The method according to any one of the above claims, which further comprises:
said first data conversion means further includes means to convert said first form definition data set back into said field attribution data set;
inputting said first form definition data set;
accessing said first data conversion means;
reconverting said first form definition data set back into said field attribution data set;
displaying said editing window and said field attribute window on said display device in said processor means;
displaying in said field attribute window an alphanumeric display of field attributes for said reconverted field attribute data set.

9. The method of claim 8, which further comprises:
displaying in said editing window a graphical depiction of a selection area positioned at a location on said editing window in response to said field attributes for said reconverted field attribute data set.

10. The method according to any one of the above claims, which further comprises:
said first data conversion means further includes means to convert said first form definition data set back into said field attribution data set;
inputting said first form definition data set;
accessing said first data conversion means;
reconverting said first form definition data set back into said field attribution data set;
displaying said editing window and said field attribute window on said display device in said processor means;
displaying in said field attribute window an alphanumeric display of field attributes for said reconverted field attribute data set;
displaying in said editing window a graphical depiction of a selection area positioned at a location on said editing window in response to said field attributes for said reconverted field attribute data set.

11. The method according to any one of the above claims, wherein said defining step further comprises:
performing a line finding process in said processor means, to locate enclosed boxes which depict fields in said image of said document displayed in said editing window;
identifying coordinates of said enclosed boxes;
displaying in said field attribute window, an alphanumeric display of said coordinates of at least one of said enclosed boxes, as field attributes which include field location coordinates;
selectively storing said field attributes displayed in said field attribute window, as said field attribute data set.

## Patentansprüche

1. In einem Datenverarbeitungssystem, das ein Prozessormittel enthält, um ein Bild eines ursprünglichen Dokumentenformulars zu empfangen, wobei das Dokumentenformular eine Vielzahl von Feldern hat, um das Formular mit Zeichen zu beschriften, wobei das Prozessormittel eine Vielzahl von Zeichenerkennungsprogrammen enthält, wobei jedes Zeichenerkennungsprogramm einen entsprechenden Formulardefinitions-Datensatz verwendet, der aus einer Vielzahl von Felddefinitions-Datensätzen, einem für jedes der Vielzahl der Felder auf dem ursprünglichen Dokumentenformular, besteht, wobei ein erstes der Vielzahl der Zeichenerkennungsprogramme ein erstes Format für Formulardefinitions-Datensätze und ein zweites der Vielzahl der Zeichenerkennungsprogramme ein zweites Format für Formulardefinitions-Datensätze verwendet, ein Verfahren, das dazu dient, der Vielzahl der Zeichenerkennungsprogramme das Erkennen von Zeichen zu ermöglichen, mit denen eine ausgefüllte Version des Dokumentenformulars beschriftet wird, wobei das Verfahren die folgenden Schritte umfasst:
Speichern eines ersten Datenumwandlungsmittels in dem Prozessormittel, um einen Feldattribut-Datensatz in das erste Format für einen Formulardefinitions-Datensatz umzuwandeln;
Speichern eines zweiten Datenumwandlungsmittels in dem Prozessormittel, um einen Feldattribut-Datensatz in das zweite Format für einen Formulardefinitions-Datensatz umzuwandeln;
Eingeben eines Bildes des ursprünglichen Dokumentenformulars in das Prozessormittel;
Definieren einer Vielzahl von Feldattribut-Datensätzen, einem für jedes der Vielzahl der Felder auf dem Formular, in dem Prozessormittel;
Empfangen eines Signals in dem Definitionsschritt, das eine Position eines ersten der Vielzahl der Felder auf dem Bild des ursprünglichen Dokumentenformulars anzeigt;
in dem Definitionsschritt Umwandeln des Signals in Feldpositionsinformationen für das erste Feld und Speichern der Informationen in einem ersten Feldattribut-Datensatz;
in dem Prozessormittel Empfangen einer ersten Auswahl für das erste Zeichenerkennungsprogramm und Zugreifen auf das erste Datenumwandlungsmittel, um den ersten Feldattribut-Datensatz in einen ersten Formulardefinitions-Datensatz umzuwandeln, der das erste Format aufweist;
in dem Prozessormittel Empfangen einer zweiten Auswahl für das zweite Zeichenerkennungsprogramm und Zugreifen auf das zweite Datenumwandlungsmittel, um den ersten Feldattribut-Datensatz in einen zweiten Formulardefinitions-Datensatz umzuwandeln, der das zweite Format aufweist;
in dem Prozessormittel Empfangen eines Bildes einer ausgefüllten Version des Dokumentenformulars;
Durchführen der Zeichenerkennung auf der ausgefüllten Version des Dokuments in dem Prozessormittel mit dem ersten der Vielzahl der Zeichenerkennungsprogramme unter Verwendung des ersten Formulardefinitions-Datensatzes und
Durchführen der Zeichenerkennung auf der ausgefüllten Version des Dokuments in dem Prozessormittel mit dem zweiten der Vielzahl der Zeichenerkennungsprogramme unter Verwendung des zweiten Formulardefinitions-Datensatzes;
Ausgeben einer ersten Zeichendarstellung von dem Prozessormittel unter Verwendung des ersten Zeichenerkennungsprogramms; und
Ausgeben einer zweiten Zeichendarstellung von dem Prozessormittel unter Verwendung des zweiten Zeichenerkennungsprogramms.

2. In einem Datenverarbeitungssystem, das einen ersten Prozessor enthält, der mit einem zweiten Prozessor verbunden ist, wobei der erste Prozessor einen Dokumentenscanner enthält, um ein Bild eines ursprünglichen Dokumentenformulars zu empfangen, das eine Vielzahl von Feldern hat, um das Formular mit Zeichen zu beschriften,
wobei der zweite Prozessor eine Vielzahl von Zeichenerkennungsprogrammen enthält, wobei jedes Zeichenerkennungsprogramm einen entsprechenden Formulardefinitions-Datensatz verwendet, der aus einer Vielzahl von FelddefinitionsDatensätzen, einem für jedes der Vielzahl der Felder auf dem ursprünglichen Dokumentenformular, zusammengesetzt ist,
wobei ein erstes der Vielzahl der Zeichenerkennungsprogramme ein erstes Format für Formulardefinitions-Datensätze verwendet und
ein zweites der Vielzahl der Zeichenerkennungsprogramme ein zweites Format für Formulardefinitions-Datensätze verwendet,
ein Verfahren, das dazu dient, der Vielzahl der Zeichenerkennungsprogramme das Erkennen von Zeichen zu ermöglichen, mit denen eine ausgefüllte Version des Dokumentenformulars beschriftet wird, wobei das Verfahren die folgenden Schritte umfasst:
Speichern eines ersten Datenumwandlungsmittels in dem ersten Prozessor, um einen Feldattribut-Datensatz in das erste Format für einen Formulardefinitions-Datensatz umzuwandeln;
Speichern eines zweiten Datenumwandlungsmittels in dem ersten Prozessor, um einen Feldattribut-Datensatz in das zweite Format für einen Formulardefinitions-Datensatz umzuwandeln;
Einscannen eines Bildes des ursprünglichen Dokumentenformulars in den ersten Prozessor;
Definieren einer Vielzahl von Feldattribut-Datensätzen, einem für jedes der Vielzahl der Felder auf dem Formular, in dem ersten Prozessor;
wobei der Definitionsschritt Folgendes umfasst:
Empfangen eines Zeigereinheit-Signals, das eine Position eines ersten der Vielzahl der Felder auf dem Bild des ursprünglichen Dokumentenformulars anzeigt;
Umwandeln des Zeigereinheit-Signals in Feldpositionsinformationen für das erste Feld und Speichern der Informationen in einem ersten Feldattribut-Datensatz;
Empfangen von Attributinformationen für das erste Feld und Speichern der Informationen in dem ersten Feldattribut-Datensatz; und
wobei die Attributinformationen erwartete Datentypinformationen und erwartete Datenformatinformationen enthalten;
wobei das Verfahren des Weiteren die folgenden Schritte umfasst:
in dem ersten Prozessor Empfangen einer ersten Auswahl für das erste Zeichenerkennungsprogramm und Zugreifen auf das erste Datenumwandlungsmittel, um den ersten Feldattribut-Datensatz in einen ersten Formulardefinitions-Datensatz umzuwandeln, der das erste Format aufweist;
in dem ersten Prozessor Empfangen einer zweiten Auswahl für das zweite Zeichenerkennungsprogramm und Zugreifen auf das zweite Datenumwandlungsmittel, um den ersten Feldattribut-Datensatz in einen zweiten Formulardefinitions-Datensatz umzuwandeln, der das zweite Format aufweist;
Übertragen des ersten und des zweiten Formulardefinitions-Datensatzes an den zweiten Prozessor;
in dem zweiten Prozessor Empfangen eines Bildes einer ausgefüllten Version des Dokumentenformulars;
Durchführen der Zeichenerkennung auf der ausgefüllten Version des Dokuments in dem zweiten Prozessor mit dem ersten der Vielzahl der Zeichenerkennungsprogramme unter Verwendung des ersten Formulardefinitions-Datensatzes und
Durchführen der Zeichenerkennung auf der ausgefüllten Version des Dokuments in dem zweiten Prozessor mit dem zweiten der Vielzahl der Zeichenerkennungsprogramme unter Verwendung des zweiten Formulardefinitions-Datensatzes;
Ausgeben einer ersten Zeichendarstellung von dem zweiten Prozessor unter Verwendung des ersten Zeichenerkennungsprogramms; und
Ausgeben einer zweiten Zeichendarstellung von dem zweiten Prozessor unter Verwendung des zweiten Zeichenerkennungsprogramms.

3. Verfahren nach Anspruch 1 oder 2, das des Weiteren Folgendes umfasst:
das erste Datenumwandlungsmittel, das dazu dient, den Feldattribut-Datensatz in den ersten Formulardefinitions-Datensatz umzuwandeln, ist eine erste Datenzuordnungstabelle und/oder eine erste Rechnerprogramm-Unterroutine, die in dem Prozessormittel gespeichert wird, und
das zweite Datenumwandlungsmittel, das dazu dient, den Feldattribut-Datensatz in den zweiten Formulardefinitions-Datensatz umzuwandeln, ist eine zweite Datenzuordnungstabelle und/oder eine zweite Rechnerprogramm-Unterroutine, die in dem Prozessormittel gespeichert wird.

4. Verfahren nach einem der vorstehenden Ansprüche, wobei der Definitionsschritt des Weiteren Folgendes umfasst:
Anzeigen eines Editierfensters und eines Feldattributfensters auf einer Anzeigeeinheit in dem Prozessormittel;
wobei das Feldattributfenster eine alphanumerische Anzeige von Feldattributen bereitstellt, die Feldpositionskoordinaten einschließen;
wobei das Editierfenster das Bild des Dokuments anzeigt und eine grafische Darstellung eines Auswahlbereichs bereitstellt, der als Antwort auf das Signal neben dem angezeigten Bild des Dokuments angeordnet und an einer Stelle in dem Editierfenster positioniert wird;
wobei das Feldattributfenster eine alphanumerische Darstellung von Koordinaten der Position des Auswahlbereichs anzeigt;
selektives Speichern der Feldattribute, die in dem Feldattributfenster angezeigt werden, als der Feldattribut-Datensatz.

5. Verfahren nach einem der vorstehenden Ansprüche, wobei der Definitionsschritt des Weiteren Folgendes umfasst:
die Attribute enthalten des Weiteren den Feldnamen, die Feldbreite, die Feldhöhe, die maximale Zeichenzahl, die Segmentierung, die Ausrichtung, den Schwellenwert, die Kontextprüfung, den erforderlichen Status, den erforderlichen Wert, den Datentyp und die Schriftart.

6. Verfahren nach einem der vorstehenden Ansprüche, das des Weiteren Folgendes umfasst:
Speichern eines dritten Datenumwandlungsmittels in dem Prozessormittel, um einen Feldattribut-Datensatz in eine geänderte Version des ersten Formats für einen Formulardefinitions-Datensatz umzuwandeln;
wobei das dritte Datenumwandlungsmittel das erste Datenumwandlungsmittel ersetzt;
Zugreifen auf das dritte Datenumwandlungsmittel, um den ersten Feldattribut-Datensatz in einen ersten Formulardefinitions-Datensatz umzuwandeln, der die geänderte Version des ersten Formats aufweist.

7. Verfahren nach Anspruch 6, das des Weiteren Folgendes umfasst:
das dritte Datenumwandlungsmittel, das dazu dient, den Feldattribut-Datensatz in die geänderte Version des ersten Formulardefinitions-Datensatzes umzuwandeln, ist eine dritte Rechnerprogramm-Unterroutine, die in dem Prozessormittel gespeichert wird.

8. Verfahren nach einem der vorstehenden Ansprüche, das des Weiteren Folgendes umfasst:
das erste Datenumwandlungsmittel enthält des Weiteren ein Mittel, das dazu dient, den ersten Formulardefinitions-Datensatz in den Feldattribut-Datensatz zurückzuwandeln;
Eingeben des ersten Formulardefinitions-Datensatzes;
Zugreifen auf das erste Datenumwandlungsmittel;
Zurückwandeln des ersten Formulardefinitions-Datensatzes in den Feldattribut-Datensatz;
Anzeigen des Editierfensters und des Feldattributfensters auf der Anzeigeeinheit in dem Prozessormittel;
Anzeigen einer alphanumerischen Anzeige von Feldattributen für den zurückgewandelten Feldattribut-Datensatz in dem Feldattributfenster.

9. Verfahren nach Anspruch 8, das des Weiteren Folgendes umfasst:
als Antwort auf die Feldattribute für den zurückgewandelten Feldattribut-Datensatz Anzeigen einer grafischen Darstellung eines Auswahlbereichs in dem Editierfenster, der an einer Stelle in dem Editierfenster positioniert ist.

10. Verfahren nach einem der vorstehenden Ansprüche, das des Weiteren Folgendes umfasst:
das erste Datenumwandlungsmittel enthält des Weiteren ein Mittel, das dazu dient, den ersten Formulardefinitions-Datensatz in den Feldattribut-Datensatz zurückzuwandeln;
Eingeben des ersten Formulardefinitions-Datensatzes;
Zugreifen auf das erste Datenumwandlungsmittel;
Zurückwandeln des ersten Formulardefinitions-Datensatzes in den Feldattribut-Datensatz;
Anzeigen des Editierfensters und des Feldattributfensters auf der Anzeigeeinheit in dem Prozessormittel;
Anzeigen einer alphanumerischen Anzeige von Feldattributen für den zurückgewandelten Feldattribut-Datensatz in dem Feldattributfenster;
als Antwort auf die Feldattribute für den zurückgewandelten Feldattribut-Datensatz Anzeigen einer grafischen Darstellung eines Auswahlbereichs in dem Editierfenster, der an einer Stelle in dem Editierfenster positioniert ist.

11. Verfahren nach einem der vorstehenden Ansprüche, wobei der Definitionsschritt des Weiteren Folgendes umfasst:
Durchführen eines Zeilensuchprozesses in dem Prozessormittel, um umschlossene Kästchen aufzufinden, die Felder in dem Bild des Dokuments darstellen, das in dem Editierfenster angezeigt wird;
Feststellen der Koordinaten der umschlossenen Kästchen;
Anzeigen einer alphanumerischen Anzeige der Koordinaten von mindestens einem der umschlossenen Kästchen in dem Feldattributfenster als Feldattribute, die Feldpositionskoordinaten einschließen;
selektives Speichern der Feldattribute, die in dem Feldattributfenster angezeigt werden, als der Feldattribut-Datensatz.

## Revendications

1. Dans un systeme de traitement de données comprenant un moyen de processeur destiné à recevoir une image d'un formulaire de document original, le formulaire de document comportant une pluralité de champs en vue de l'inscription de caractères sur le formulaire, ledit moyen de processeur comprenant une pluralité de programmes de reconnaissance de caractères, chaque programme de reconnaissance de caractères utilisant un ensemble de données de définition de formulaire correspondant composé d'une pluralité d'ensembles de données de definition de champ, un ensemble pour chacun des champs de ladite pluralité de champs sur ledit formulaire de document original, un premier programme parmi ladite pluralité de programmes de reconnaissance de caractères utilisant un premier format pour les ensembles de données de definition de formulaire, et un second programme parmi ladite pluralité de programmes de reconnaissance de caractères utilisant un second format pour les ensembles de données de definition de formulaire, procédé destiné à permettre à ladite pluralité de programmes de reconnaissance de caractères de reconnaitre des caractères inscrits sur une version remplie dudit formulaire de document, comprenant les étapes consistant à :
mémoriser un premier moyen de conversion de données dans ledit moyen de processeur, afin de convertir un ensemble de données d'attribution de champ en ledit format destiné à un ensemble de données de definition de formulaire,
mémoriser un second moyen de conversion de données dans ledit moyen de processeur, afin de convertir un ensemble de données d'attribution de champ en ledit second format destiné à un ensemble de données de definition de formulaire,
fournir en entrée audit moyen de processeur une image dudit formulaire de document original,
définir dans ledit moyen de processeur une pluralité d'ensembles de données d'attributs de champ, un ensemble pour chaque champ de ladite pluralité de champs sur ledit formulaire,
recevoir un signal dans ladite étape de définition, indiquant un emplacement d'un premier champ parmi ladite pluralité de champ, sur ladite image dudit formulaire de document original,
convertir ledit signal de ladite étape de définition, en des informations d'emplacement de champ se rapportant audit premier champ, et les mémoriser dans un premier ensemble de données d'attributs de champ,
recevoir dans ledit moyen de processeur, une première sélection destinée audit premier programme de reconnaissance de caractères, et accéder audit premier moyen de conversion de données afin de convertir ledit premier ensemble de données d'attributs de champ en un premier ensemble de données de définition de formulaire présentant ledit premier format,
recevoir dans ledit moyen de processeur, une seconde sélection destinée audit second programme de reconnaissance de caractères, et accéder audit second moyen de conversion de données afin de convertir ledit premier ensemble de données d'attributs de champ en un second ensemble de données de définition de formulaire présentant ledit second format,
recevoir dans ledit moyen de processeur une image d'une version remplie dudit formulaire de document,
réaliser une reconnaissance de caractères sur ladite version remplie du document dans ledit moyen de processeur à l'aide dudit premier programme parmi ladite pluralité de programmes de reconnaissance de caractères en utilisant ledit premier ensemble de données de définition de formulaire, et
réaliser une reconnaissance de caractères sur ladite version remplie du document dans ledit moyen de processeur à l'aide dudit second programme parmi ladite pluralité de programmes de reconnaissance de caractères en utilisant ledit second ensemble de données de définition de formulaire,
fournir en sortie une première représentation de caractères à partir dudit moyen de processeur en utilisant ledit premier programme de reconnaissance de caractères, et
fournir en sortie une seconde représentation de caractères à partir dudit moyen de processeur en utilisant ledit second programme de reconnaissance de caractères.

2. Dans un système de traitement de données comprenant un premier processeur associé à un second processeur,
le premier processeur comprenant un analyseur de document destiné à recevoir une image d'un formulaire de document original, le formulaire de document comportant une pluralité de champs en vue de l'inscription de caractères sur le formulaire,
le second processeur comprenant une pluralité de programmes de reconnaissance de caractères, chaque programme de reconnaissance de caractères utilisant un ensemble de données de définition de formulaire correspondant composé d'une pluralité d'ensembles de données de définition de champ, un ensemble pour chaque champ de ladite pluralité de champs sur ledit formulaire de document original,
un premier programme parmi ladite pluralité de programmes de reconnaissance de caractères utilisant un premier format pour les ensembles de données de définition de formulaire, et
un second programme parmi ladite pluralité de programmes de reconnaissance de caractères utilisant un second format pour les ensembles de données de définition de formulaire,
procédé destiné à permettre que ladite pluralité de programmes de reconnaissance de caractères reconnaisse des caractères inscrits sur une version remplie dudit formulaire de document, comprenant les étapes consistant à :
mémoriser un premier moyen de conversion de données dans ledit premier processeur, afin de convertir un ensemble de données d'attribution de champ en ledit premier format destiné à un ensemble de données de définition de formulaire,
mémoriser un second moyen de conversion de données dans ledit premier processeur, afin de convertir un ensemble de données d'attribution de champ en ledit second format destiné à un ensemble de données de définition de formulaire,
introduire par analyse dans ledit premier processeur une image dudit formulaire de document original,
définir dans ledit premier processeur une pluralité d'ensembles de données d'attributs de champ, un ensemble pour chaque champ de ladite pluralité de champs sur ledit formulaire,
ladite étape de définition comprenant :
la réception d'un signal d'un dispositif de pointage indiquant un emplacement d'un premier champ parmi ladite pluralité de champs sur ladite image dudit formulaire de document original,
la conversion dudit signal de dispositif de pointage en des informations d'emplacement de champ se rapportant audit premier champ et les mémoriser dans un premier ensemble de données d'attributs de champ,
la réception d'informations d'attributs se rapportant audit premier champ et les mémoriser dans ledit premier ensemble de données d'attributs de champ, et
lesdites informations d'attributs comprenant des informations de type de données attendues et des informations de format de données attendues,
le procédé comprenant en outre les étapes consistant à :
recevoir dans ledit premier processeur, une première sélection destinée audit premier programme de reconnaissance de caractères et accéder audit premier moyen de conversion de données afin de convertir ledit premier ensemble de données d'attribution de champ en un premier ensemble de données de définition de formulaire présentant ledit premier format,
recevoir dans ledit premier processeur, une seconde sélection destinée audit second programme de reconnaissance de caractères et accéder audit second moyen de conversion de données afin de convertir ledit premier ensemble de données d'attribution de champ en un second ensemble de données de définition de formulaire présentant ledit second format,
transférer lesdits premier et second ensembles de données de définition de formulaire vers ledit second processeur,
recevoir dans ledit second processeur une image d'une version remplie dudit formulaire de document,
réaliser une reconnaissance de caractère sur ladite version remplie du document dans ledit second processeur à l'aide dudit premier programme parmi ladite pluralité de programmes de reconnaissance de caractères en utilisant ledit premier ensemble de données de définition de formulaire, et
réaliser une reconnaissance de caractères sur ladite version remplie du document dans ledit second processeur à l'aide dudit second programme parmi ladite pluralité de programmes de reconnaissance de caractères en utilisant ledit second ensemble de données de définition de formulaire,
fournir en sortie une première représentation de caractères à partir dudit second processeur en utilisant ledit premier programme de reconnaissance de caractères, et
fournir en sortie une seconde représentation de caractères à partir dudit second processeur en utilisant ledit second programme de reconnaissance de caractères.

3. Procédé selon la revendication 1 ou 2, qui comprend en outre :
ledit premier moyen de conversion de données destiné à convertir ledit ensemble de données d'attribution de champ en ledit premier ensemble de données de définition de formulaire est une première table de mappage de données et/ou un premier sous-programme de programme informatique mémorisé dans ledit moyen de processeur, et
ledit second moyen de conversion de données destiné à convertir ledit ensemble de données d'attribution de champ en ledit second ensemble de données de définition de formulaire est une seconde table de mappage de données et/ou un second sous-programme de programme informatique mémorisé dans ledit moyen de processeur.

4. Procédé selon l'une quelconque des revendications précédentes, dans lequel ladite étape de définition comprend en outre :
l'affichage d'une fenêtre d'édition et d'une fenêtre d'attributs de champ sur un dispositif d'affichage dudit moyen de processeur,
ladite fenêtre d'attributs de champ procurant un affichage alphanumérique d'attributs de champ qui comprennent des coordonnées d'emplacement de champ,
ladite fenêtre d'édition affichant ladite image dudit document et procurant une représentation graphique d'une région de sélection qui est juxtaposée à ladite image affichée dudit document et positionnée à un emplacement sur ladite fenêtre d'édition en réponse audit signal,
ladite fenêtre d'attributs de champ affichant une représentation alphanumérique des coordonnées dudit emplacement de ladite. zone de sélection,
la mémorisation sélective desdits attributs de champ affichés dans ladite fenêtre d'attributs de champ, sous forme dudit ensemble de données d'attributs de champ.

5. Procédé selon l'une quelconque des revendications précédentes, dans lequel ladite étape de définition comprend en outre :
lesdits attributs comprennent en outre un nom de champ, une largeur de champ, une hauteur de champ, des caractères maximum, une segmentation, une orientation, un seuil, une vérification de contexte, un état exigé, une valeur exigée, un type de données et une police de caractères.

6. Procédé selon l'une quelconque des revendications précédentes, lequel comprend en outre :
la mémorisation d'un troisième moyen de conversion de données dans ledit moyen de processeur, destiné à convertir un ensemble de données d'attribution de champ en une version modifiée dudit premier format destiné à un ensemble de données de définition de formulaire,
ledit troisième moyen de conversion de données remplaçant ledit premier moyen de conversion de données,
l'accès audit troisième moyen de conversion de données afin de convertir ledit premier ensemble de données d'attribution de champ en un premier ensemble de données de définition de formulaire présentant ladite version modifiée dudit premier format.

7. Procédé selon la revendication 6, lequel comprend en outre :
ledit troisième moyen de conversion de données destiné à convertir ledit ensemble de données d'attribution de champ en ladite version modifiée dudit premier ensemble de données de définition de formulaire est un troisième sous-programme de programme informatique mémorisé dans ledit moyen de processeur.

8. Procédé selon l'une quelconque des revendications précédentes, lequel comprend en outre :
ledit premier moyen de conversion de données comprend en outre un moyen destiné à reconvertir ledit premier ensemble de données de définition de formulaire en ledit ensemble de données d'attribution de champ,
l'application en entrée dudit premier ensemble de données de définition de formulaire,
l'accès audit premier moyen de conversion de données,
la reconversion dudit premier ensemble de données de définition de formulaire en ledit ensemble de données d'attribution de champ,
l'affichage de ladite fenêtre d'édition et de ladite fenêtre d'attributs de champ sur ledit dispositif d'affichage dans ledit moyen de processeur,
l'affichage dans ladite fenêtre d'attributs de champ d'un affichage alphanumérique des attributs de champ se rapportant audit ensemble de données d'attributs de champ reconverti.

9. Procédé selon la revendication 8, lequel comprend en outre :
l'affichage dans ladite fenêtre d'édition d'une représentation graphique d'une zone de sélection positionnée à un emplacement sur ladite fenêtre d'édition en réponse auxdits attributs de champ se rapportant audit ensemble de données d'attributs de champ reconverti.

10. Procédé selon l'une quelconque des revendications précédentes, lequel comprend en outre :
ledit premier moyen de conversion de données comprend en outre un moyen destiné à reconvertir ledit premier ensemble de données de définition de formulaire en ledit ensemble de données d'attribution de champ,
l'application en entrée dudit premier ensemble de données de définition de formulaire,
l'accès audit premier moyen de conversion de données,
la reconversion dudit premier ensemble de données de définition de formulaire en ledit ensemble de données d'attribution de champ,
l'affichage de ladite fenêtre d'édition et de ladite fenêtre d'attributs de champ sur ledit dispositif d'affichage dans ledit moyen de processeur,
l'affichage dans ladite fenêtre d'attributs de champ d'un affichage alphanumérique des attributs de champ se rapportant audit ensemble de données d'attributs de champ reconverti,
l'affichage dans ladite fenêtre d'édition d'une représentation graphique d'une zone de sélection positionnée à un emplacement sur ladite fenêtre d'édition en réponse auxdits attributs de champ se rapportant audit ensemble de données d'attributs de champ reconverti.

11. Procédé selon l'une quelconque des revendications précédentes, dans lequel ladite étape de définition comprend en outre :
l'exécution d'un traitement de repérage de ligne dans ledit moyen de processeur, afin de localiser des pavés entourés qui représentent des champs dans ladite image dudit document affichée dans ladite fenêtre d'édition,
identifier les coordonnées desdits pavés entourés,
afficher dans ladite fenêtre d'attributs de champ, un affichage alphanumérique desdites coordonnées d'au moins l'un desdits pavés entourés, en tant qu'attributs de champ qui comprennent des coordonnées d'emplacement de champ,
mémoriser de façon sélective lesdits attributs de champ affichés dans ladite fenêtre d'attributs de champ, en tant que dit ensemble de données d'attributs de champ.
